# EUROPÄISCHE PATENTSCHRIFT

(11) **EP 0 549 529 B1**
(45) Veröffentlichungstag und Bekanntmachung des Hinweises auf die Patenterteilung: **11.09.1996**
(21) Anmeldenummer: 92810992.5
(22) Anmeldetag: 11.12.1992
(51) Int. Cl.: D06P 3/66, D06P 3/62, C09B 31/08, C09B 31/22, C09B 35/039, C09B 43/16, C09B 45/28, C09B 62/04

(54) **Verfahren zum Färben oder Bedrucken von hydroxylgruppenhaltigen Fasermaterialien**
Process for dyeing or printing of hydroxyl group-containing fiber materials
Procédé de teinture ou d'impression de matériaux fibreux contenant des groupes hydroxyles

(30) Priorität: 20.12.1991 CH 3815/91
(43) Veröffentlichungstag der Anmeldung: 30.06.1993
(73) Patentinhaber: CIBA-GEIGY AG, 4002 Basel (CH)
(72) Erfinder: McMullan, David Harold, CH-4123 Allschwil (CH); Schaulin, Rudolf, Dr., CH-4125 Riehen (CH); Lauk, Urs, Dr., CH-8047 Zürich (CH)

(56) Entgegenhaltungen:
- EP-A- 0 011 873
- EP-A- 0 044 805
- EP-A- 0 116 513
- EP-A- 0 357 560
- EP-A- 0 465 420
- CH-A- 135 951
- CH-A- 671 025
- DE-A- 2 311 396
- DE-A- 3 320 972
- DE-C- 725 224
- FR-A- 1 573 145
- GB-A- 2 166 147
- CHEMICAL ABSTRACTS, vol. 97, no. 14, 4. Oktober 1982, Columbus, Ohio, US; abstract no. 111284, 'Disazodyes'
- CHEMICAL ABSTRACTS, vol. 111, no. 16, 16. Oktober 1989, Columbus, Ohio, US; abstract no. 136008, INOUE ET AL. "Water-based copper-containing dye compositions"
- CHEMICAL ABSTRACTS, vol. 98, no. 20, 16. Mai 1983, Columbus, Ohio, US; abstract no. 162365, BUJALA ET AL. 'Dyes for cellulose fibres'

## Beschreibung

Die vorliegende Erfindung betrifft ein Verfahren zum Färben oder Bedrucken von hydroxylgruppenhaltigen Fasermaterialien mit Farbstoffmischungen nach dem Trichromieprinzip.

Für das Färben oder Bedrucken von textilen Fasermaterialien nach dem Di- oder Trichromieprinzip benötigt man unter anderem Farbstoffe mit möglichst gleichmässigem Farbaufbau bei gleichzeitiger Nuancenkonstanz in verschiedenen Konzentrationen und einer guten Kombinierbarkeit, um gefärbte/bedruckte textile Fasermaterialien zu erhalten, die den Anforderungen weitgehend genügen.

Mit den bisher verwendeten Farbstoffen/Farbstoffmischungen war dieses Ziel nicht immer zu erreichen, insbesondere bezüglich Kombinierbarkeit, Ziehgeschwindigkeit Ziehgrad, Faser- und Flächenegalität sowie Allgemeinechtheiten, wie z.B. Nassechtheit, und es war deshalb die Aufgabe der vorliegenden Erfindung, verbesserte Verfahren zum Färben oder Bedrucken von hydroxylgruppenhaltigen Fasermaterialien nach dem Trichromieprinzip bereitzustellen.

Es wurde nun gefunden, dass das erfindungsgemässe Verfahren die genannten Anforderungen erfüllt.

Gegenstand der vorliegenden Erfindung ist somit ein Verfahren zum Trichromie-Färben oder Bedrucken von hydroxylgruppenhaltigen Fasermaterialien, welches dadurch gekennzeichnet ist, dass man gemäß Anspruch 1 mindestens einen gelb- oder orangefärbenden Farbstoff zusammen mit mindestens einem blaufärbenden und mindestens einem rotfärbenden Farbstoff verwendet.

Als gelb- oder orangefärbende Farbstoffe verwendet man für das erfindungsgemäße Verfahren mindestens einen Farbstoff der Formel 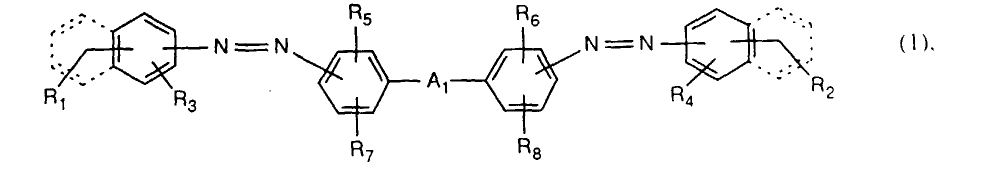 worin R₁ und R₂ Wasserstoff, C₁-C₈-Alkyl, C₁-C₈-Alkoxy, Halogen, Carboxy, Sulfo. Ureido, gegebenenfalls im Alkylteil substituiertes C₂-C₆-Alkanoylamino oder gegebenenfalls substituiertes Arylazo, R₃, R₄, R₅, R₆, R₇ und R₈ Wasserstoff, C₁-C₈-A-ky-A C₁-C₈-A-koxyl Halogen, Carboxy, Sulfo, Ureido oder gegebenenfalls im Alkylteil substituiertes C₂-C₆-Alkanoylamino bedeuten und A₁ ein Rest der Formel 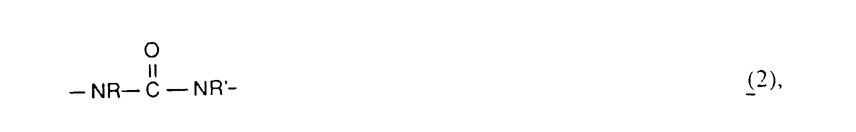 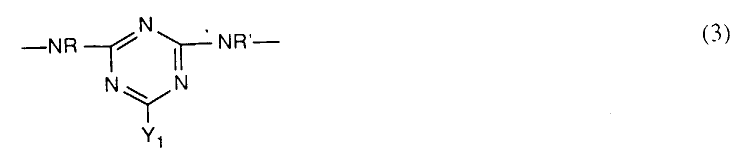 oder 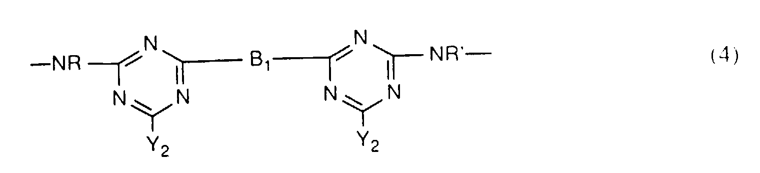 ist, wobei R und R' Wasserstoff oder gegebenenfalls substituiertes C₁-C₈-Alkyl, Y₁ im Rest der Formel (3) und Y₂ im Rest der Formel (4) Hydroxy, C₁-C₄-Alkoxy, Chlor, Broii. C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino. Cyclohexylamino, unsubstituiertes oder im Phenylteil durch C₁-C₄-A-kyDS C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl bedeuten und B₁ im Rest der Formel (4) ein Brückenglied ist.

Als Halogen kommen für R₁, R₂, R₃, R₄, R₅, R₆, R₇ und R₈ in der Formel (1) unabhängig voneinander z.B. Fluor, Brom oder insbesondere Chlor in Betracht.

Als C₁-C₈-A-ky- kommen für R₁, R₂, R₃, R₄, R₅, R₆, R₇ und R₈ in der Formel (1) und für R und R' in den Formeln (2) bis (4) unabhängig voneinander z. B. Methyl, Äthyl, Propyl, Isopropyl, Butyl, sek.-Butyl, tert.-Butyl, Isobutyl, Pentyl, Hexyl, Heptyl und Octyl in Betracht. Vorzugsweise sind R₁, R₂, R₃, R₄, R₅, R₆, R₇, R₈, R und R' C₁-C₄-Alkyl.

Die Reste R und R' in den Formeln (2) bis (4) als C₁-C₈-Alkyl können substituiert sein, z.B. durch C₁-C₄-Alkoxy, C₁-C₄-Alkoxycarbonyl, Hydroxy, Halogen, wie z.B. Chlor oder Fluor, Carboxy, Cyan, Sulfo oder Sulfato. Als Beispiele seien Carboxymethyl, β-Carboxyethyl, Methoxycarbonylmethyl, Ethoxycarbonylmethyl, β-Methoxyethyl, β-Ethoxyethyl, β-Chlorethyl, γ-Chlorpropyl, β-Hydroxyethyl, β-Hydroxybutyl, β-Cyanethyl, Sulfomethyl, β-Sulfoethyl, β-Sulfatoethyl.

Vorzugsweise haben R und R' die gleichen Bedeutungen. Bevorzugt sind R und R' Wasserstoff oder C₁-C₄-Alkyl, insbesondere Wasserstoff.

Als C₁-C₈-Alkoxy kommt für R₁, R₂, R₃, R₄, R₅, R₆, R₇ und R₈ im der Formel (1) insbesondere C₁-C₄-Alkoxy, wie Methoxy, Äthoxy, Propoxy, Isopropoxy, Butoxy, sek.-Butoxy, Isobutoxy oder tert.-Butoxy in Betracht.

Als C₂-C₆-Alkanoylamino kommt für R₁, R₂, R₃, R₄, R₅, R₆, R₇ und R₈ in der Formel (1) insbesondere C₂-C₄-Alkanoylamino, wie z.B. Acetylamino oder Propionylamino, in Betracht. Als im Alkylteil substituiertes C₂-C₆-Alkanoylamino kommen z.B.die durch Carboxy oder insbesondere Hydroxy substituierten Reste in Betracht,

Als Arylazo kommen für R₁ und R₂ in der Formel (1) unabhängig voneinander z.B. Naphthylazo- oder vorzugsweise Phenylazoreste in Betracht, wobei die genannten Reste jeweils unsubstituiert oder z.B. durch Sulfo, C₁-C₄-Alkyl, C₁-C₄-Alkoxy und/oder Halogen weitersubstituiert sein können. Insbesondere handelt es sich dabei um einen unsubstituierten oder durch Sulfo, Methyl, Methoxy und/oder Chlor substituierten Phenylazorest.

Beispiele für Substituenten Y₁ in der Formel (3) und Y₂ in der Formel (4) sind Hydroxy, Methoxy, Ethoxy, n- oder iso-Propoxy, Chlor, Methylthio, Ethylthio, Amino, Methylamino, Ethylamino, Carboxymethylamino, β-Hydroxyethlamino, N,N-Di-β-hydroxyethylamino, β-Sulfoethylamino, Phenylamino, o-, m- oder p-Methylphenylamino, o-, m- oder p-Methoxyphenylamino, o-, m- oder p-Chlor-phenylamino, o-, m- oder p-Sulfophenylamino, 2,4- oder 2,5-Disulfophenylamino, o-Carboxyphenylamino, N-Ethyl-N-Ethyl-N-phenylamino, N-Methyl-N-phenylamino und Morpholino.

Bevorzugt sind Y₁ und Y₂ unabhängig voneinander Chlor, Amino, unsubstituiertes oder im Alkylteil durch Hydroxy substituiertes N-Mono- oder N,N-Di-C₁-C₄-Alkylamino, Phenylamino oder Morpholino, insbesondere Morpholino oder Chlor.

Als Brückenglieder B₁ in Formel (4) kommen z.B. die Reste der Formeln

-NR-(CH₂)₂₋₄-NR'- (5),

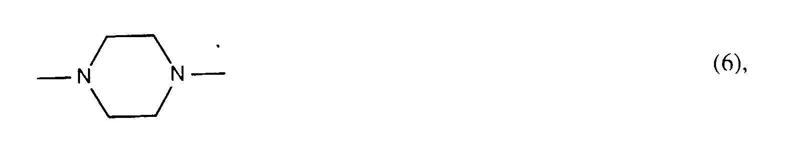

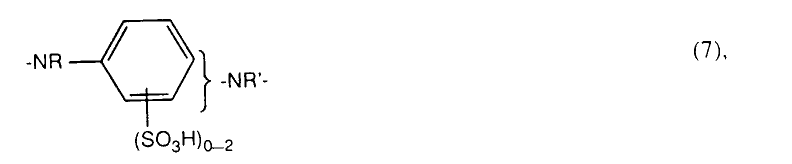

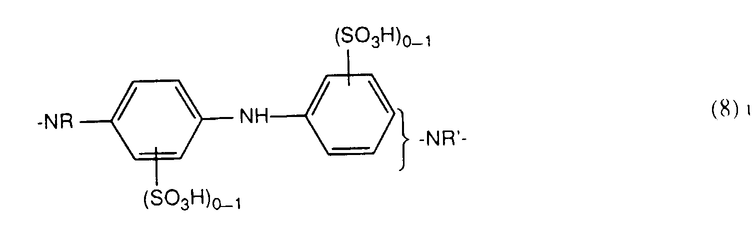

und 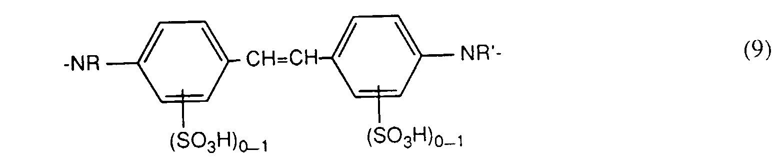 in Betracht, wobei R und R' die zuvor angegebenen Bedeutungen und Bevorzugungen haben. Vorzugsweise ist B₁ ein Rest der Formel (6).

Bevorzugt verwendet man Farbstoffe der Formel (1), worin R₁, R₂, R₃, R₄, R₅, R₆, R₇ und R₈ Wasserstoff, C₁-C₄-Alkyl, C₁-C₄-Alkoxy, C₂-C₄-Alkanoylamino, Halogen oder Sulfo sind. R₁, R₂, R₃ und R₄ sind insbesondere Wasserstoff oder Sulfo.

Besonders bevorzugt verwendet man Farbstoffe der Formel (1), worin R₁, R₂, R₃ und R₄ Wasserstoff oder Sulfo, R₅, R₆, R₇ und R₈ Wasserstoff, C₁-C₄-Alkyl, C₁-C₄-Allkoxy. C₂-C₄-Alkanoylamino, Halogen oder Sulfo sind, B₁ ein Rest der Formel (6) ist und Y₁ und Y₂ Chlor, Amino, unsubstituiertes oder im Alkylteil durch Hydroxy substituiertes N-Mono- oder N,N-Di-C₁-C₄-Alkylamino, Phenylamino oder Morpholino, insbesondere Morpholino oder Chlor, sind.

Ganz besonders bevorzugt verwendet man als Farbstoffe der Formel (1) Farbstoffe der Formel 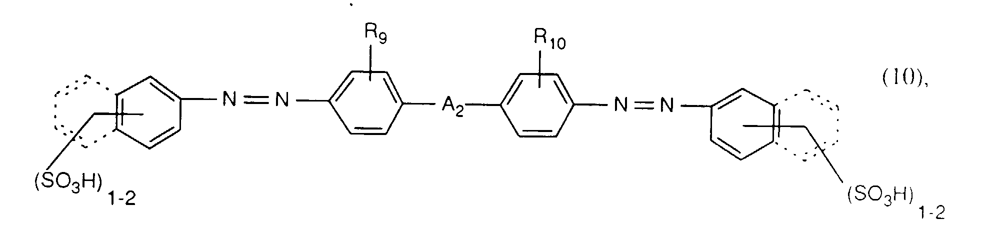 worin R₉ und R₁₀ Wasserstoff, C₁-C₄-Alkyl, C₁-C₄-Alkoxy, C₂-C₄-Alkanoylamino, Halogen oder Sulfo, insbesondere Wasserstoff oder C₂-C₄-Alkanoylamino, sind und A₂ ein Rest der Formel 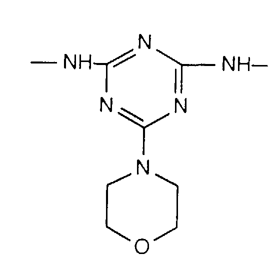 oder 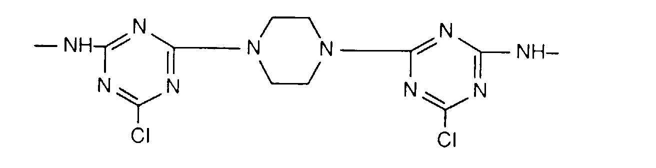 ist.

Als Farbstoffe der Formel (1) sind für das erfindungsgemässe Verfahren die Farbstoffe der Formeln und 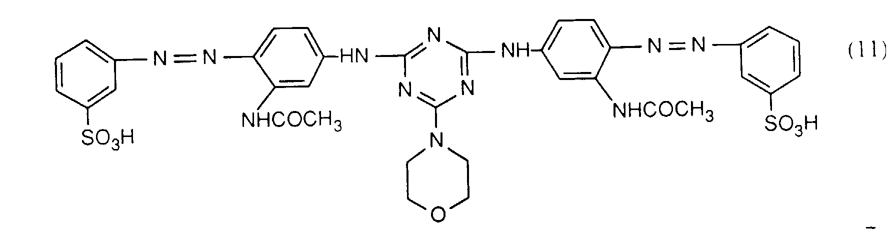 und 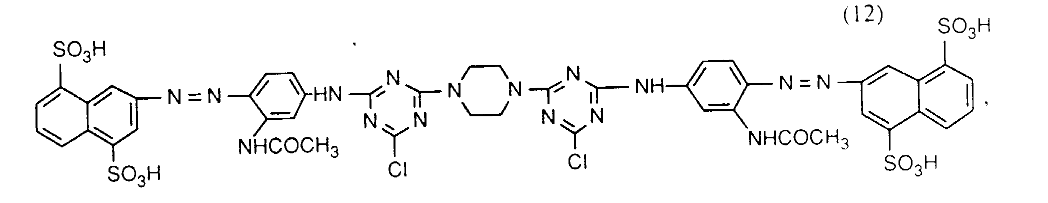 insbesondere der Farbstoff der Formel (11), von besonderem Interesse.

Als blaufärbende Farbstoffe verwendet man in dem erfindungsgemässen Verfahren vorzugsweise mindestens einen Farbstoff der Formeln (13), (14) und (15) 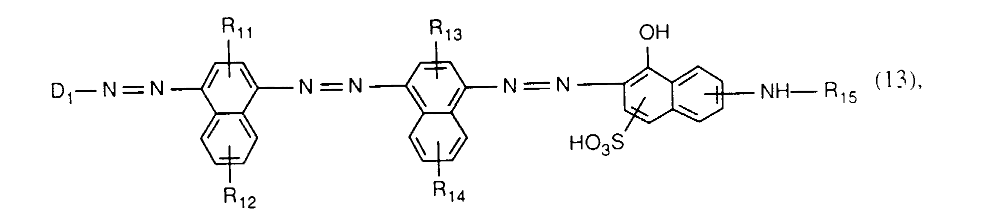 worin D₁ gegebenenfalls substituiertes Phenyl oder Naphthyl, R₁₁, R₁₂, R₁₃ und R₁₄ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und R₁₅ Wasserstoff, gegebenenfalls substituiertes C₁-C₈-Alkyl, gegebenenfalls in Alkylteil substituiertes C₂-C₆-Alkanoyl oder gegebenenfalls im Phenylring substituiertes Phenyl oder Benzoyl bedeutet, 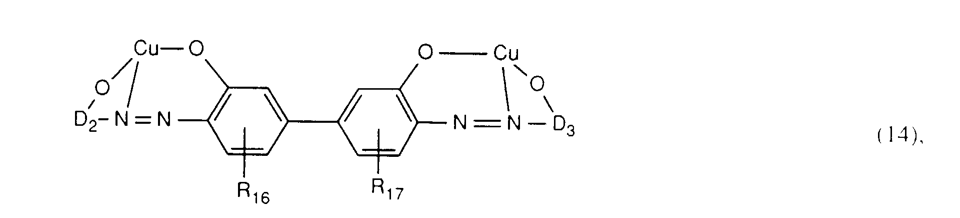 worin D₂ und D₃ gegebenenfalls substituiertes Naphthyl und R₁₆ und R₁₇ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten, 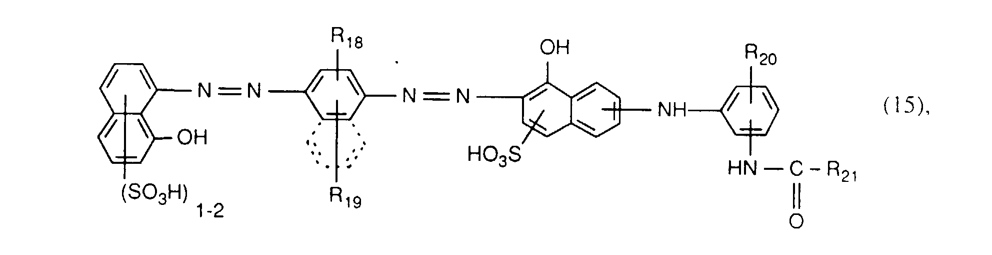 worin R₁₈, R₁₉ und R₂₀ Wasserstoff, gegebenenfalls substituiertes C₁-C₈-Alkyl oder C₁-C₈-A-koxyl Halogen, Carboxy, Sulfo, Ureido oder gegebenenfalls im Alkylteil substituiertes C₂-C₆-Alkanoylamino bedeuten und R₂₁ gegebenenfalls substituiertes C₁-C₈-Alkyl oder Phenyl ist.

Als Halogen kommen für R₁₁, R₁₂, R₁₃ und R₁₄ in der Formel (13), R₁₆ und R₁₇ in Formel (14) und R₁₈, R₁₉ und R₂₀ in Formel (15) unabhängig voneinander z.B. Fluor, Brom oder insbesondere Chlor in Betracht.

Als gegebenenfalls substituiertes C₁-C₈-Alkyl kommt für R₁₁, R₁₂, R₁₃, R₁₄ und R₁₅ in der Formel (13), R₁₆ und R₁₇ in Formel (14) und R₁₈, R₁₉, R₂₀ und R₂₁ in Formel (15) insbesondere C₁-C₄-Alkyl, wie Methyl, Äthyl, Propyl, Isopropyl, Butyl, sek.-Butyl, tert.-Butyl oder Isobutyl, sowie die z.B. durch C₁-C₄-Alkoxy, C₁-C₄-Alkoxycarbonyl. Hydroxy, Halogen, wie z.B. Chlor oder Fluor, Carboxy, Cyan, Sulfo oder Sulfato substituierten Reste in Betracht.

Als gegebenenfalls substituiertes C₁-C₈-Alkoxy kommt für R₁₁, R₁₂, R₁₃ und R₁₄ in der Formel (13), R₁₆ und R₁₇ in Formel (14) und R₁₈, R₁₉ und R₂₀ in Formel (15) insbesondere C₁-C₄-Alkoxy, wie Methoxy, Äthoxy, Propoxy, Isopropoxy, Butoxy, sek.-Butoxy, Isobutoxy oder tert.-Butoxy, sowie die z.B. durch Hydroxy oder Carboxy substituierten Reste in Betracht.

Als C₂-C₆-Alkanoylamino kommt für R₁₁, R₁₂, R₁₃ und R₁₄ in der Formel (13), R₁₆ und R₁₇ in Formel (14) und R₁₈, R₁₉ und R₂₀ in Formel (15) insbesondere C₂-C₄-Alkanoylamino, wie z.B. Acetylamino oder Propionylamino, in Betracht. Als im Alkylteil substituiertes C₂-C₆-Alkanoylamino kommen z.B die durch Hydroxy substituierten Reste in Betracht.

Als C₂-C₆-Alkanoyl kommt für R₁₅ in der Formel (13) insbesondere C₂-C₄-Alkanoyl, wie z.B. Acetyl oder Propionyl, in Betracht. Als im Alkylteil substituiertes C₂-C₆-Alkanoyl kommen z.B die durch Hydroxy substituierten Reste in Betracht.

Die Reste D₁ in der Bedeutung als Phenyl oder Naphthyl, D₂ und D₃ als Naphthyl, R₁₅ als Phenyl oder Benzoyl sowie R₂₁ als Phenyl können unsubstituiert oder substituiert sein. Als Beispiele für Substituenten seien Halogen, Amino, Sulfo, Carboxy, Ureido, gegebenenfalls im Alkylteil durch Hydroxy weitersubstituiertes C₂-C₄-Alkanoylamino, C₁-C₄-Alkyl, gegebenenfalls durch Hydroxy oder Carboxy weitersubstituiertes C₁-C₄-Alkoxy sowie gegebenenfalls im Phenylring durch Carboxy, Halogen, Sulfo, C₁-C₄-Alkyl oder C₁-C₄-Alkoxy weitersubstituiertes Benzoylamino oder Phenylamino.

Als blaufärbende Farbstoffe verwendet man für das erfindungsgemässe Verfahren mindestens einen Farbstoff der Formeln 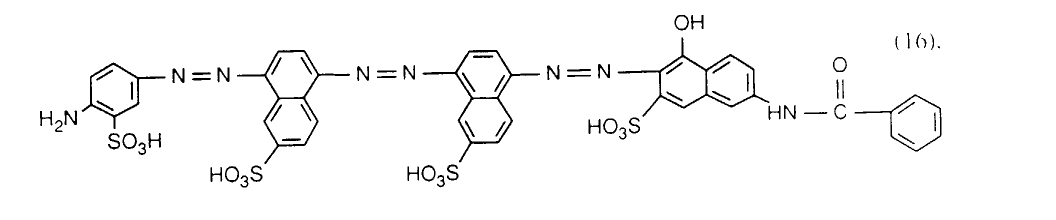 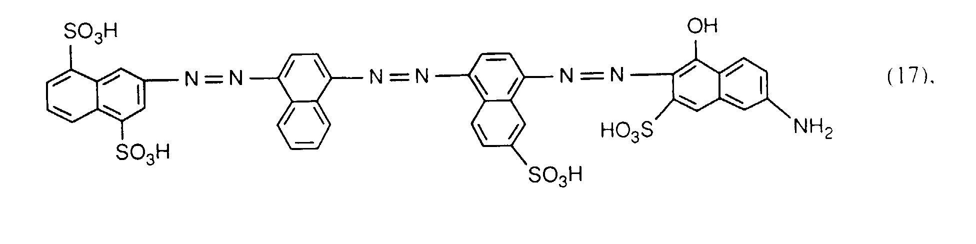 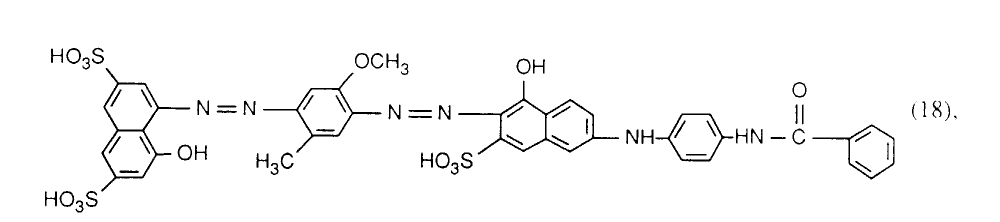 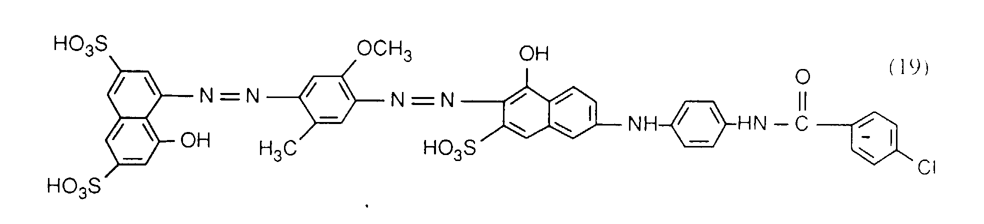 und 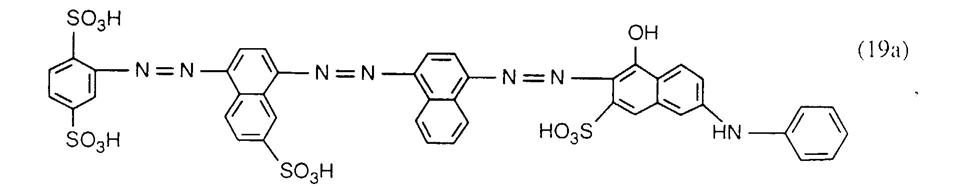 insbesondere den Farbstoff der Formel (16).

Als rotfärbende Farbstoffe verwendet man für das erfindungsgemässe Verfahren mindestens einen Farbstoff der Formeln (20), (21), (22), (23) und (24) 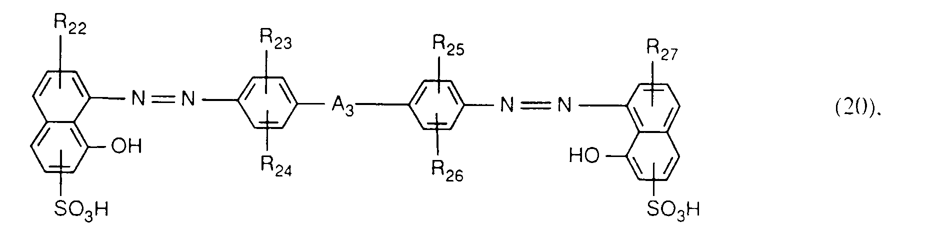 worin R₂₂, R₂₃, R₂₄, R₂₅, R₂₆ und R₂₇ Wasserstoff, gegebenenfalls substituiertes C₁-C₈-Alkyl oder C₁-C₈-Alkoxy, Halogen, Carboxy, Sulfo, Ureido oder gegebenenfalls in Alkylteil substituiertes C₂-C₆-Alkanoylamino bedeuten und A₃ ein Rest der Formel

-NH-,

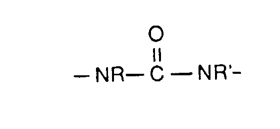

oder 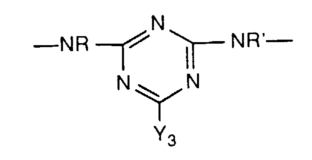 ist, wobei R und R' Wasserstoff oder gegebenenfalls substituiertes C₁-C₈-Alkyl und Y₃ Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl bedeuten, 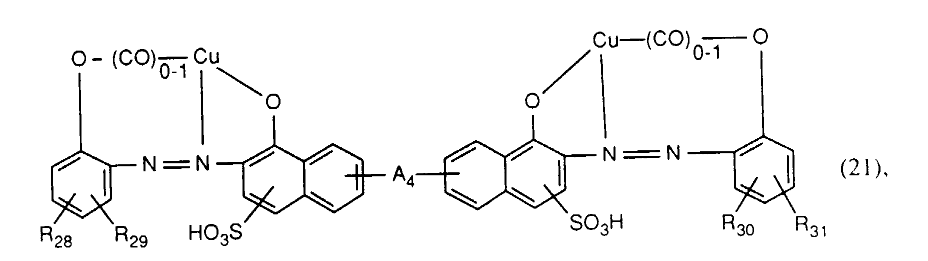 worin R₂₈, R₂₉, R₃₀ und R₃₁ Wasserstoff, gegebenenfalls substituiertes C₁-C₈-Alkyl oder C₁-C₈-Alkoxy, Halogen, Carboxy, Sulfo, Ureido, Sulfamoyl oder gegebenenfalls im Alkylteil substituiertes C₂-C₆-Alkanoylamino sind und A₄ die oben unter Formel (20) fiir A₃ angegebenen Bedeutungen hat, 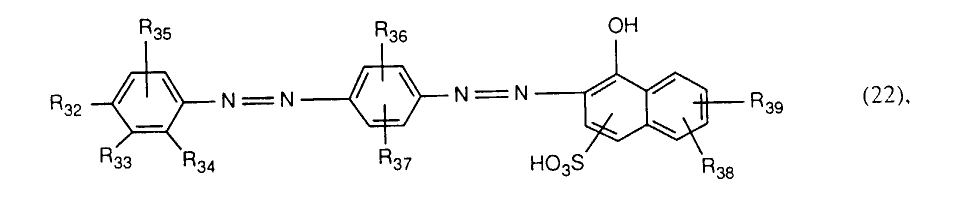 worin R₃₂, R₃₃, R₃₄, R₃₅, R₃₆, R₃₇ und R₃₈ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind und R₃₉ gegebenenfalls im Phenylring substituiertes Benzoylamino oder ein gegebenenfalls im Phenylring weitersubstituierter Rest der Formel 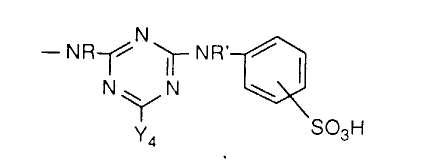 ist, wobei R und R' Wasserstoff oder gegebenenfalls substituiertes C₁-C₈-Alkyl und Y₄ die oben unter Formel (20) für Y₃ angegebenen Bedeutungen hat, 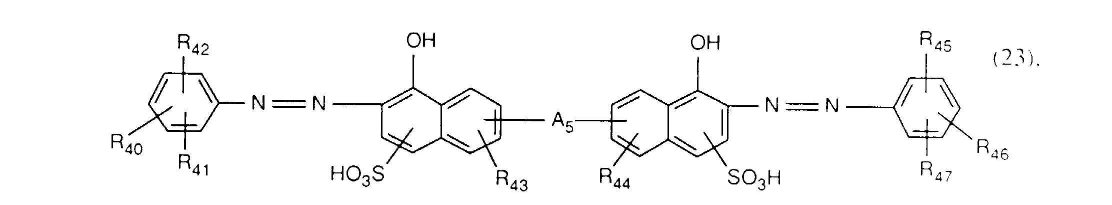 worin R₄₀, R₄₁, R₄₂, R₄₃, R₄₄, R₄₅, R₄₆ und R₄₇ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind wobei R₄₀ und R₄₆ zusätzlich gegebenenfalls im Phenylring substituiertes Phenylazo bedeuten können, und A₅ die oben unter Formel (20) für A₃ angegebenen Bedeutungen hat oder ein Rest der Formel 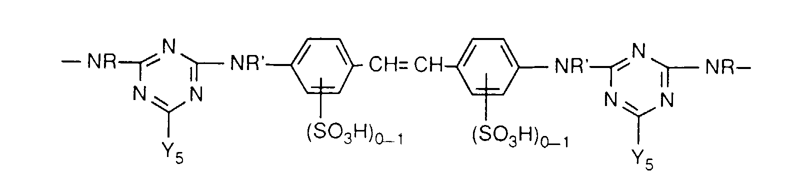 ist, wobei R und R' Wasserstoff oder gegebenenfalls substituiertes C₁-C₈-Alkyl sind und Y₅ die oben unter Formel (20) für Y₃ angegebenen Bedeutungen hat, 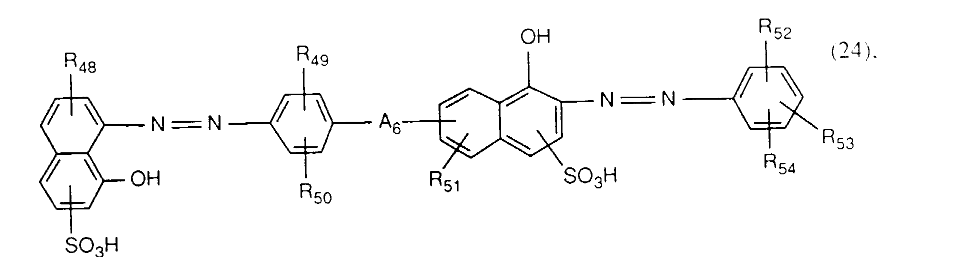 worin R₄₈, R₄₉, R₅₀, R₅₁, R₅₂, R₅₃ und R₅₄ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und A₆ die oben unter Formel (20) für A₃ angegebenen Bedeutungen hat.

Als Halogen kommen für R₂₂, R₂₃, R₂₄, R₂₅, R₂₆ und R₂₇ in der Formel (20), R₂₈, R₂₉, R₃₀ und R₃₁ in Formel (21), R₃₂, R₃₃, R₃₄, R₃₅, R₃₆, R₃₇ und R₃₈ in Formel (22), R₄₀, R₄₁, R₄₂, R₄₃, R₄₄, R₄₅, R₄₆ und R₄₇ in Formel(23) und R₄₈, R₄₉, R₅₀, R₅₁, R₅₂, R₅₃ und R₅₄ in Formel (24) unabhängig voneinander z.B. Fluor, Brom oder insbesondere Chlor in Betracht.

Als gegebenenfalls substituiertes C₁-C₈-Alkyl kommt für die oben genannten Substituenten der Farbstoffe der Formeln (20) bis (24) sowie für R und R' insbesondere C₁-C₄-Alkyl, wie Methyl, Äthyl, Propyl, Isopropyl, Butyl, sek.-Butyl, tert.-Butyl oder Isobutyl, sowie die z.B. durch C₁-C₄-A-koxyB C₁-C₄-Alkoxycarbonyl, Hydroxy, Halogen, wie z.B. Chlor oder Fluor, Carboxy, Cyan, Sulfo oder Sulfato substituierten Reste in Betracht.

Für R und R' gelten die zuvor angegebenen Bedeutungen und Bevorzugungen.

Als gegebenenfalls substituiertes C₁-C₈-Alkoxy kommt für die oben genannten Substituenten der Farbstoffe der Formeln (20) bis (24) insbesondere C₁-C₄-Alkoxy, wie Methoxy, Äthoxy, Propoxy, Isopropoxy, Butoxy, sek.-Butoxy, Isobutoxy oder tert.-Butoxy, sowie die z.B. durch Hydroxy oder Carboxy substituierten Reste in Betracht.

Als C₂-C₆-Alkanoylamino kommt für die oben genannten Substituenten der Farbstoffe der Formeln (20) bis (24) insbesondere C₂-C₄-Alkanoylamino, wie z.B. Acetylamino oder Propionylamino, in Betracht. Als im Alkylteil substituiertes C₂-C₆-Alkanoylamino kommen z.B die durch Hydroxy substituierten Reste in Betracht.

R₃₉ in der Bedeutung als Benzoylamino oder als Rest der Formel 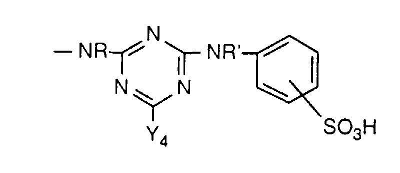 sowie R₄₀ und R₄₆ in der Bedeutung als Phenylazo können unsubstituiert oder im Phenylring substituiert sein. Als Beispiele für Substituenten seien Halogen, Amino, Sulfo, Carboxy, Ureido, gegebenenfalls im Alkylteil durch Hydroxy weitersubstituiertes C₂-C₄-Alkanoylamino, C₁-C₄-Alkyl, gegebenenfalls durch Hydroxy weitersubstituiertes C₁-C₄-Alkoxy sowie gegebenenfalls im Phenylring durch Carboxy, Halogen, Sulfo, C₁-C₄-Alkyl oder C₁-C₄-Alkoxy weitersubstituiertes Benzoylamino oder Phenylamino, insbesondere Halogen, Sulfo oder C₁-C₄-Alkyl, genannt.

Für Y₃, Y₄ und Y₅ gelten die oben für Y₁ und Y₂ genannten Bedeutungen und Bevorzugungen.

Als rotfärbende Farbstoffe verwendet man für das erfindungsgemässe Verfahren bevorzugt mindestens einen Farbstoff der Formeln 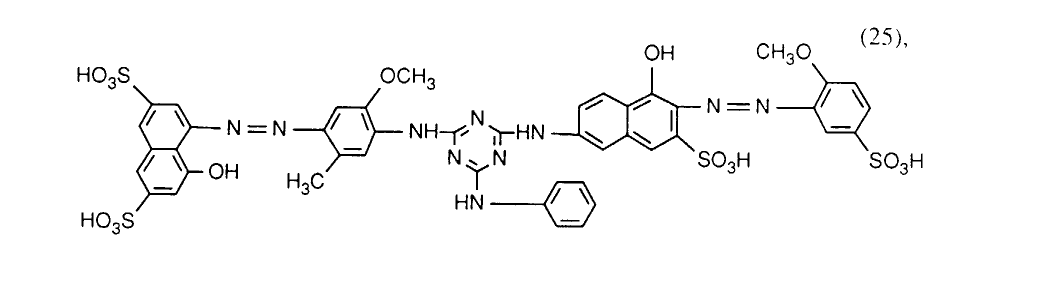 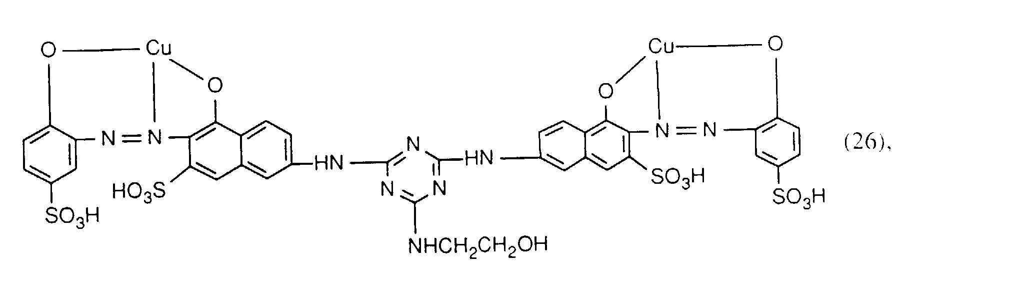 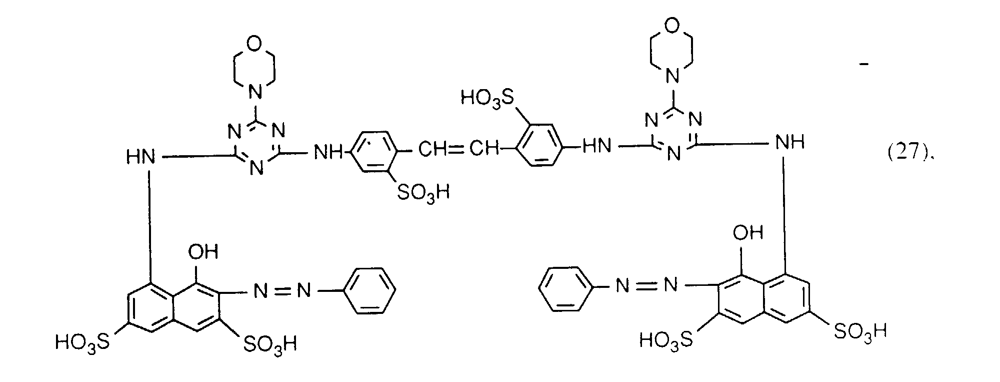 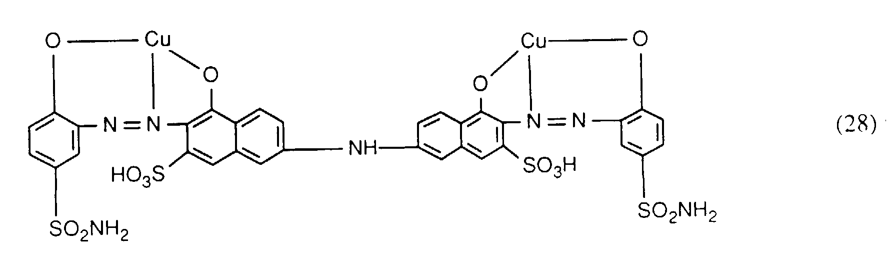 und 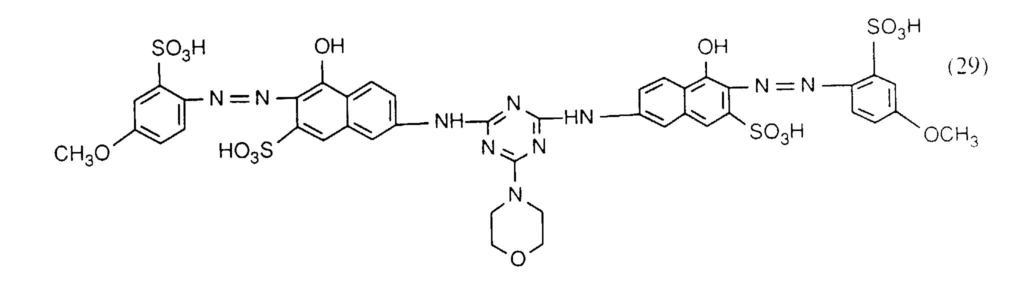 insbesondere einen Farbstoff der Formel (25).

Besonders bevorzugt verwendet man mindestens einen gelb- oder orangefärbenden Farbstoff der Formel (1) zusammen mit mindestens einem blaui;irbeniieii Farbstoff der Formeln (13) bis (15) und/oder mindestens einem rotfärbenden Farbstoff der Formeln (20) bis (24), wobei als blaufärbende Farbstoffe die der Formeln (13) und (15) und als rotfärbende Farbstoffe die der Formeln (21), (23) und (24) von besonderem Interesse sind

Ganz besonders bevorzugt verwendet man in dem erfindungsgemässen Verfahren mindestens einen gelb- oder orangefärbenden Farbstoff der Formel (1), insbesondere einen gelb- oder orangefärbenden Farbstoff der Formeln (11) und (12), zusammen mit mindestens einem blaufärbenden Farbstoff der Formeln (16), (17), (18), (19) und (19a) und mindestens einem rotfärbenden Farbstoff der Formeln (25) bis (29), wobei als blaufärbender Farbstoff vorzugsweise der Farbstoff der Formel (16) und als rotfärbender Farbstoff vorzugsweise der Farbstoff der Formel (25) in Betracht kommt.

In einer besonders wichtigen Ausführungsform des erfindungsgemässen Verfahrens verwendet man einen gelb- oder orangefärbenden Farbstoff der Formel (11) zusammen mit einem blaufärbenden Farbstoff der Formel (16) und einem rotfärbenden Farbstoff der Formel (25).

Unter Trichromie ist dabei die additive Farbmischung von passend gewählten gelb-oder orange-, rot- und blaufärbenden Farbstoffen in den zur Erzielung der gewünschten Nuance notwendigen Mengen zu verstehen.

Die für das erfindungsgemässe Verfahren verwendeten gelb- oder orangefärbenden Farbstoffe der Formel (1) sowie die blaufärbenden Farbstoffe der Formeln (13) bis (15) und die rotfärbenden Farbstoffe der Formeln (20) bis (24) sind bekannt oder könnnen in Analogie zu bekannten Farbstoffen hergestellt werden.

Bezüglich ihrer färberischen Eigenschaften können die für das erfindungsgemässe Verfahren verwendeten gelb- oder orangefärbenden Farbstoffe der Formel (1) sowie die blaufärbenden Farbstoffe der Formeln (13) bis (15) und die rotfärbenden Farbstoffe der Formeln (20) bis (24) als direktziehende oder Direktfarbstoffe (C.I. direct dyes) bezeichnet werden.

Die für das erfindungsgemässe Verfahren verwendeten gelb- oder orangefärbenden Farbstoffe der Formel (1), die blaufärbenden und die rotfärbenden Farbstoffe liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Kalium-, Lithium- oder Ammoniumsalze oder das Salz des Triäthanolamins genannt.

Für das erfindungsgemässe Verfahren können die Mengen, in denen die gelb- oder orangefärbenden Farbstoffe der Formel (1), die blaufärbenden und die rotfärbenden Farbstoffe in den Färbebädern oder Druckpasten verwendet werden, je nach der gewünschten Farbtiefe schwanken, im allgemeinen haben sich Mengen von 0,01 bis 10 Gewichtsprozent, insbesondere 0,1 bis 6 Gewichtsprozent, bezogen auf das Färbegut, als vorteilhaft erwiesen.

Als hydroxylgruppenhaltige Fasermaterialien, insbesondere textile Fasermaterialien, welche gemäss dem erfindungsgemässen Verfahren gefärbt oder bedruckt werden können, kommen z.B. solche aus cellulosischen Fasern, wie Baumwolle, Leinen oder Hanf, insbesondere Baumwolle, sowie Celluloseregeneratfasern, wie z.B. Zellwolle, Rayon oder Viskose, in Betracht.

Unter hydroxylgruppenhaltigen Fasermaterialien werden ebenfalls solche Fasermaterialien enthaltende Mischfasern verstanden. Als solche kommen z.B. Mischfasern, welche neben cellulosischen Fasematerialien noch natürliche oder synthetische Polyamidfasermaterialien oder Polyacryl- oder Polyesterfasermaterialien enthalten, in Betracht. Als Beispiele seien Wolle/Baumwoll-, Polyamid/Baumwoll-, Polyacryl/Baumwoll- oder insbesondere Polyester/Baumwoll-Mischfasern genannt.

Die textilen Fasermaterialien können in den verschiedensten Verarbeitungzuständen vorliegen, wie z.B. als Faser, Garn, Gewebe oder Gewirke.

Das erfindungsgemässe Verfahren eignet sich zum Färben, z.B. nach der Ausziehmethode oder der Foulardmethode, sowie zum Bedrucken gemäss den allgemein üblichen hierzu verwendeten Verfahren.

Bevorzugt ist das Färben nach der Ausziehmethode. Das Färben erfolgt hierbei in der Regel bei einer Temperatur von 60 bis 110°C, insbesondere 90 bis 105°C, bei einem pH-Wert von z.B. 6 bis 10, insbesondere 7 bis 9, vorzugsweise aus wässriger Flotte bei einem Flottenverhältnis von 1:5 bis 1:80, insbesondere 1:10 bis 1:20.

In einer besonders interessanten Ausführungsform des erfindungsgemässen Verfahrens erfolgt das Färben in Gegenwart eines Salzes, wie z.B. in Gegenwart eines Alkalihalogenids, insbesondere eines Alkalichlorids, oder eines Alkalisulfats. Hierbei wird insbesondere ein Teil der Salzmenge zu Beginn des Färbeprozesses zugebeben und ein weiterer Teil kurz vor oder nach Erreichung der Färbetemperatur als ganzes oder portionsweise zugegeben. Die zu Beginn des Färbeprozesses zugegebene Salzmenge beträgt in der Regel 5 bis 40% der insgesamt während des Färbeprozesses zugegebenen Salzmenge. Die kurz vor oder nach Erreichung der Färbetemperatur zugegebene Salzmenge beträgt somit 60 bis 95% der insgesamt während des Färbeprozesses zugegebenen Salzmenge. Als Bereich kurz vor Erreichung der Färbetemperatur ist beispielsweise der Bereich des Aufheizens zur Erreichung der Färbetemperatur zu verstehen, wie z.B. der Bereich der Temperatur von 80 bis 98°C. Vorzugsweise wird das Salz hierbei direkt bei Erreichung der Färbetemperatur zugegeben. Die Verwendung einer von der Gesamtmenge der eingesetzten Farbstoffe abhängenden Gesamtmenge an Salz hat sich für diese Ausführungsform des erfindungsgemässen Verfahrens als vorteilhaft erwiesen. Hierbei wird in der Regel eine mit der Gesamtmenge der eingesetzten Farbstoffe zunehmende Gesamtmenge an Salz verwendet. Bis zu einer Gesamtmenge an Farbstoff von 1% werden hierbei z.B. 6 bis 12 g/l Salz verwendet, bis zu einer Gesamtmenge an Farbstoff von 2% werden z.B. 12 bis 20 g/l Salz und oberhalb einer Gesamtmenge an Farbstoff von 2% werden beispielsweise 20 bis 40 g/l Salz verwendet. Die Mengenangaben der Farbstoffe sind hierbei Gewichtsprozente, bezogen auf das eingesetzte Fasermaterial, und entsprechen in der Regel den Farbstoffen, wie sie nach der Synthese, z.B. durch Aussalzen, erhalten werden.

Für diese Ausführungsform des erfindungsgemässen Verfahreis ist das Färben nach der Ausziehmethode bevorzugt.

Ebenfalls können Fasermaterialien, insbesondere textile Fasermaterialien, aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

So können Fasergemische aus Synthesefasern und cellulosischen Fasermaterialien, insbesondere Polyester/Baumwoll-Mischgewebe, in Gegenwart eines Dispersionsfarbstoffes für die Synthesefasern unter den Färbebedingungen für die Synthesefasern gefärbt werden. Als Synthesefasern kommen insbesondere Polyesterfasern in Betracht. Falls gemäss dieser Ausführungsform in Gegenwart von Salzen, wie z.B. einem Alkalihalogenid oder einem Alkalisulfat, gefärbt wird, so ist die Zugabe der Gesamtmenge des Salzes zu Beginn des Färbeprozesses bevorzugt.

Die für das erfindungsgemässe Verfahren verwendeten Farbstoffe sind gut mit anderen Farbstoffen, insbesondere Dispersionsfarbstoffen kombinierbar. Die für das erfindungsgemässe Verfahren verwendeten Farbstoffe weisen eine ausreichende Hochtemperatur-Stabilität auf und lassen sich so unter den Färbebedingungen für Polyesterfasern, d.h. bei Temperaturen in Bereich von etwa 100 bis 150°C, vorzugsweise von 120 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den für das erfindungsgemässe Verfahren verwendeten Farbstoffen in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie das für das erfindungsgemässe Verfahren verwendete Farbstoffgemisch sie aufweist, so ist es auch möglich, Ton-in-Ton-Färbungen zu erhalten.

Gemäss dieser Ausführungsform des erfindungsgemässen Verfahrens kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die für das erfindungsgemässe Verfahren verwendeten Farbstoffe zeichnen sich durch gleichmässigem Farbaufbau bei gleichzeitiger Nuancenkonstanz in verschiedenen Konzentrationen und einer guten Kombinierbarkeit aus. Es werden Färbungen und Drucke mit guter Faser- und Flächenegalität und guten Almgemeinechtheiten, insbesondere guten Reib-, Nass-, Nassreib-, Schweiss- und Lichtechtheiten, erhalten. Sofern nötig, kann man die Nassechtheiten, insbesondere die Waschechtheit, der erhaltenen Färbungen und Drucke durch eine Nachbehandlung mit sog. Fixiermitteln noch wesentlich verbessern. Als Beispiele für geeignete Fixiermittel seien die in der EP-A-250,265 sowie der EP-A-438,380 beschriebenen Fixiermittel genannt.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 12,5 Teile eines nicht mercerisierten Baumwollgewebes werden mit einem Teil eines nichtionogenen Netzmittels bei einer Temperatur von 80°C eingenetzt. Das so vorbehandelte Baumwollgewebe wird abgequetscht und in eine 40°C warme Farbstofflösung, welche in deionisiertem Wasser 0,4% des gelbfärbenden Farbstoffs der Formel 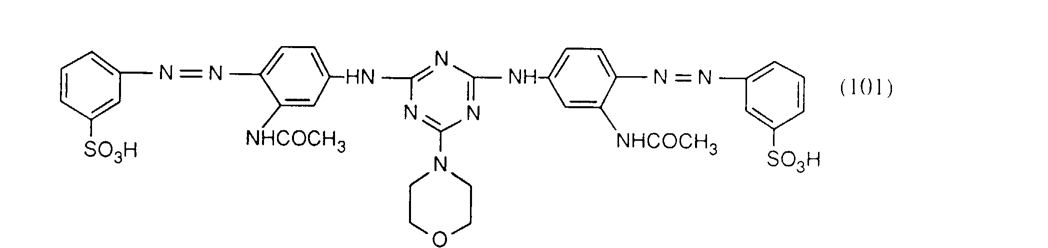 0,3% des rotfärbenden Farbstoffs der Formel 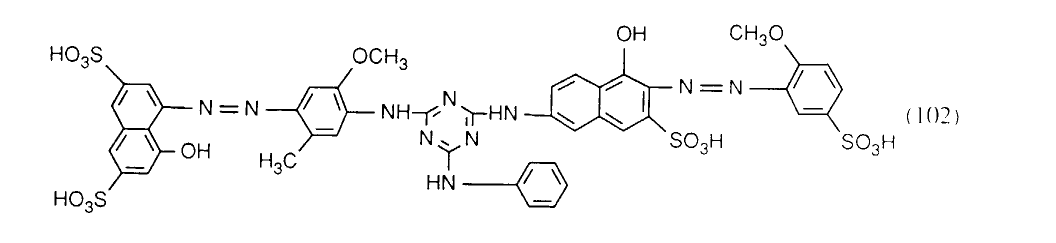 und 0,3% des blau färbenden Farbstoffs der Formel 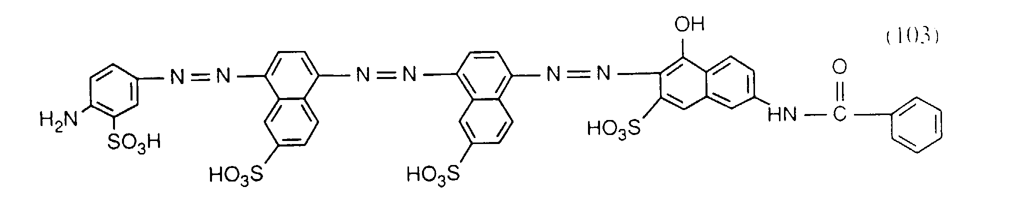 bezogen auf das Gewicht des Baumwollgewebes enthält, bei einem Flottenverhältnis von 1:20 eingetragen. Man belässt das Färbebad 5 Minuten bei einer Temperatur von 40°C, gibt dann 3 g/l Natriumsulfat zu und erhöht nach weiteren 5 Minuten die Temperatur des Färbebades mit einer Aufheizrate von 1,5°C/Minute auf Kochtemperatur. Bei Erreichen der Kochtemperatur werden 12 g/l Natriumsulfat zugegeben und man hält das Färbebad 45 Minuten bei einer Temperatur von ca. 98°C. Anschliessend wird mit einer Abkühlrate von 1°C/Minute auf eine Temperatur von ca. 80 bis 85°C abgekühlt und das Färbebad 15 Minuten bei dieser Temperatur belassen. Anschliessend wird das gefärbte Baumwollgewebe aus dem Bad herausgenommen, bei Raumtemperatur zweimal je 5 Minuten mit Wasser gespült, abgequetscht und bei einer Temperatur von ca. 80 bis 90°C im Trockenschrank getrocknet. Man erhält ein in einer ockerbraunen Nuance egal gefärbtes Baumwollgewebe, welches gute Allgemeinechtheiten aufweist. Zur Verbesserung der Nassechtheiten, insbesondere der Waschechtheit, kann das erhaltene Baumwollgewebe mit kationischen Fixiermitteln nachbehandelt werden.

Beispiele 2 bis 26: Verfährt man wie in Beispiel 1 angegeben, verwendet jedoch anstelle von 0,4% des gelbfärbenden Farbstoffs der Formel (101), 0,3% des rotfärbenden Farbstoffs der Formel (102) und 0,3% des blaufärbenden Farbstoffs der Formel (103) die in der folgenden Tabelle in Spalte 2 angegebenen Farbstoffe in den aufgeführten Mengen, anstelle von 3 g/l Natriumsulfat die in Spalte 3 angegebene Natriumsulfatmenge A und anstelle von 12 g/l Natriumsulfat die in Spalte 4 angegebene Natriumsulfatmenge B, so erhält man ein in der in Spalte 5 angegebenen Nuance gefärbtes Baumwollgewebe. Die in Spalte 2 angegebenen Farbstoffe der Formeln (104) bis (111) sind im Anschluss an die folgende Tabelle aufgeführt.

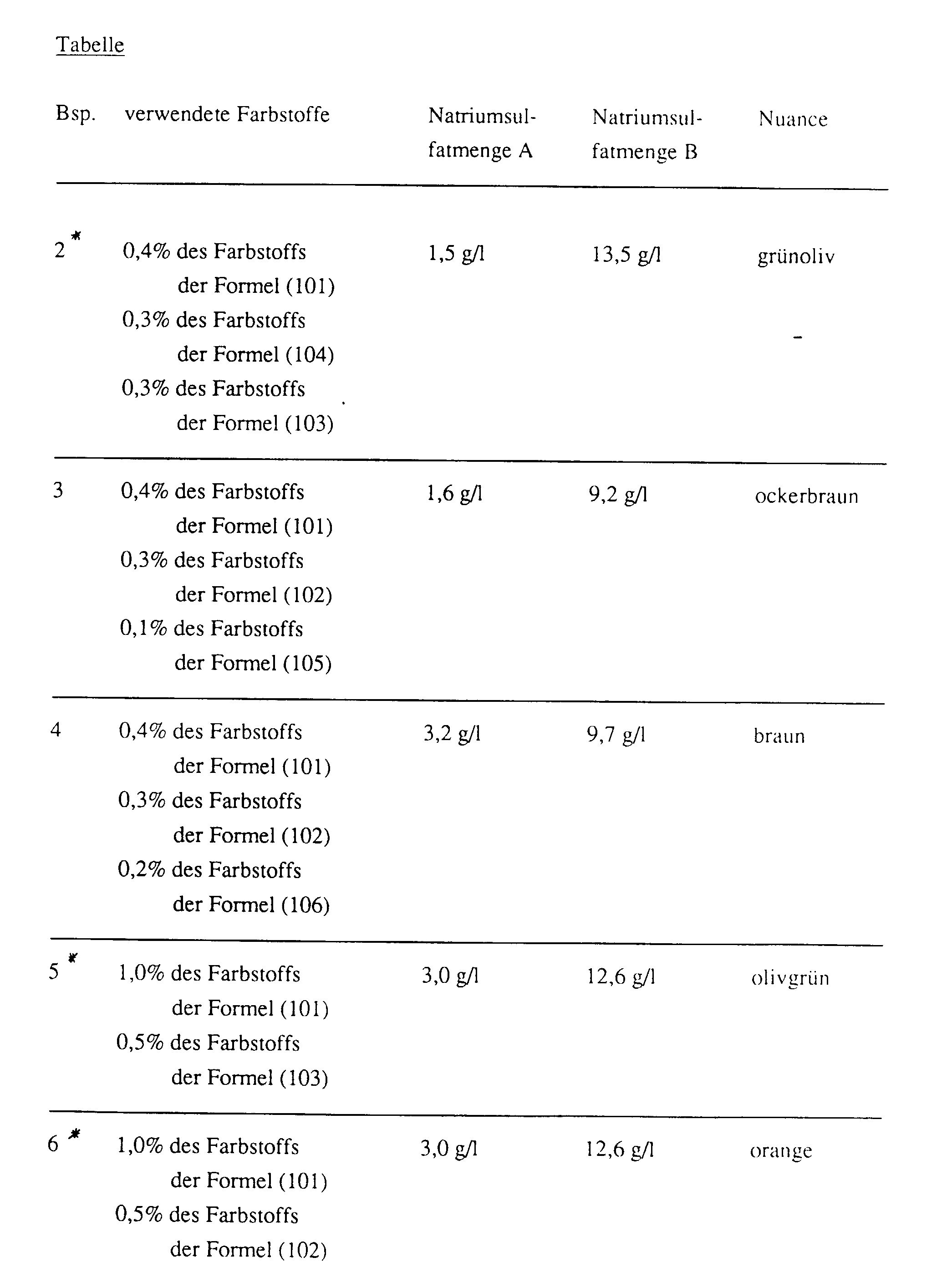

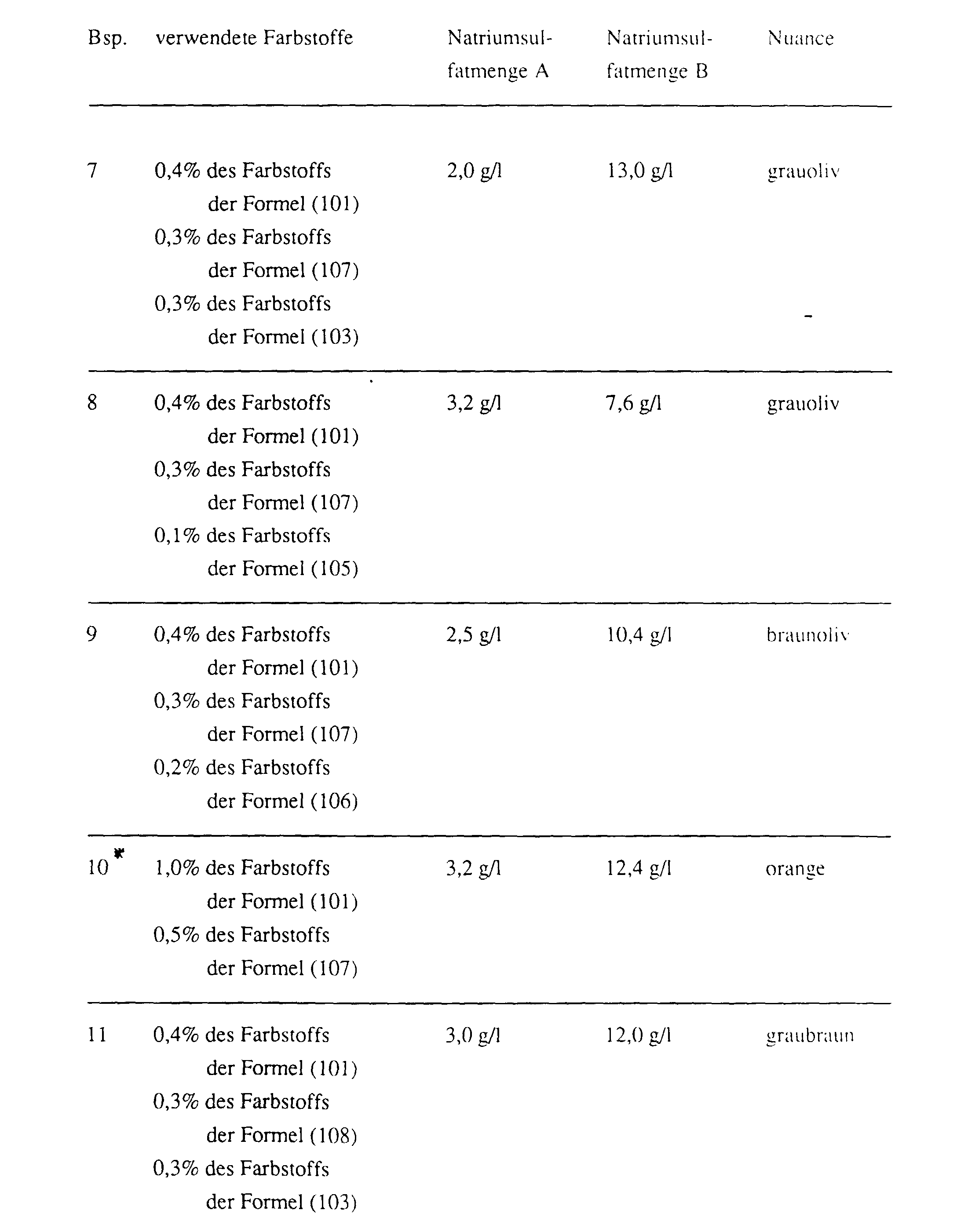

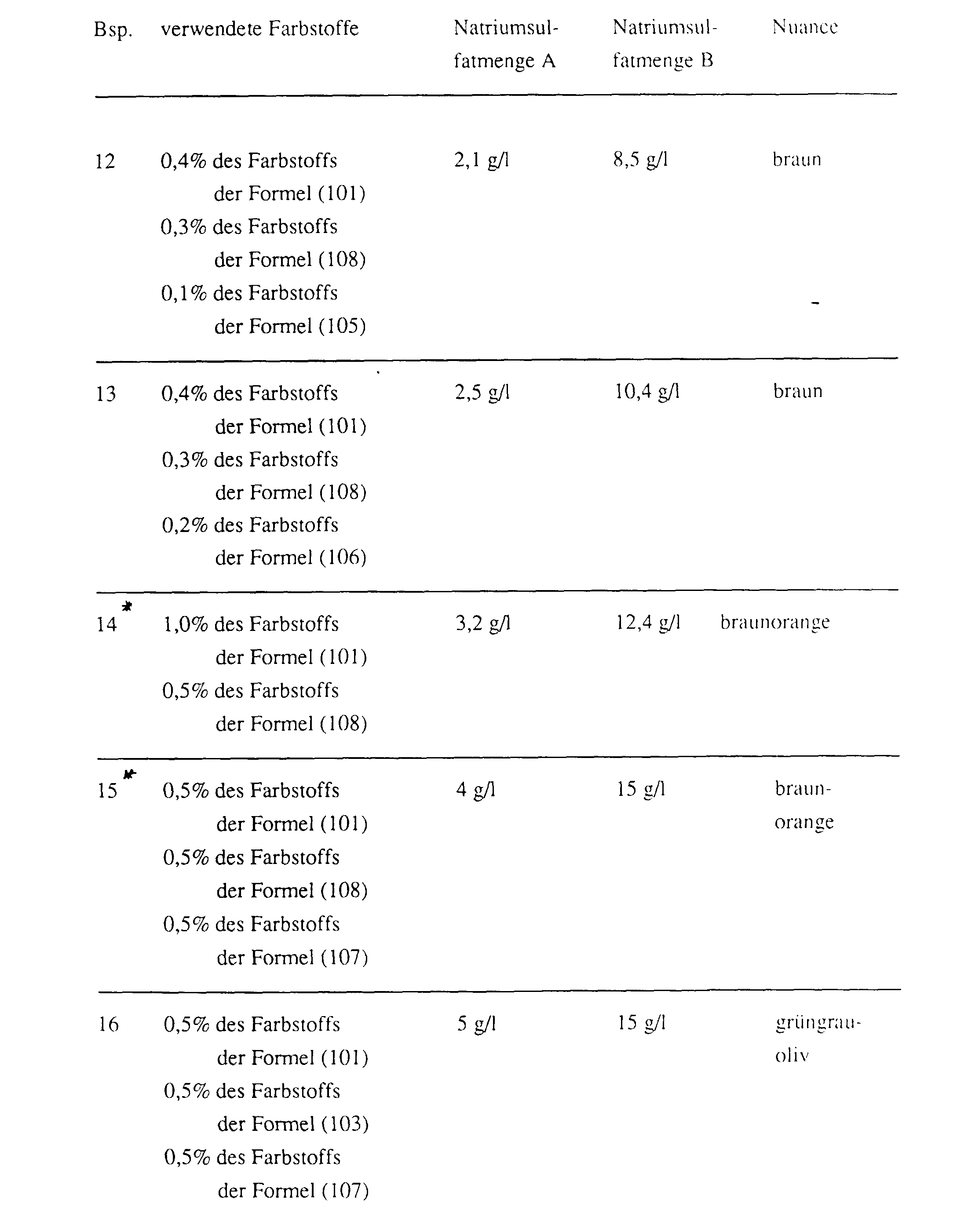

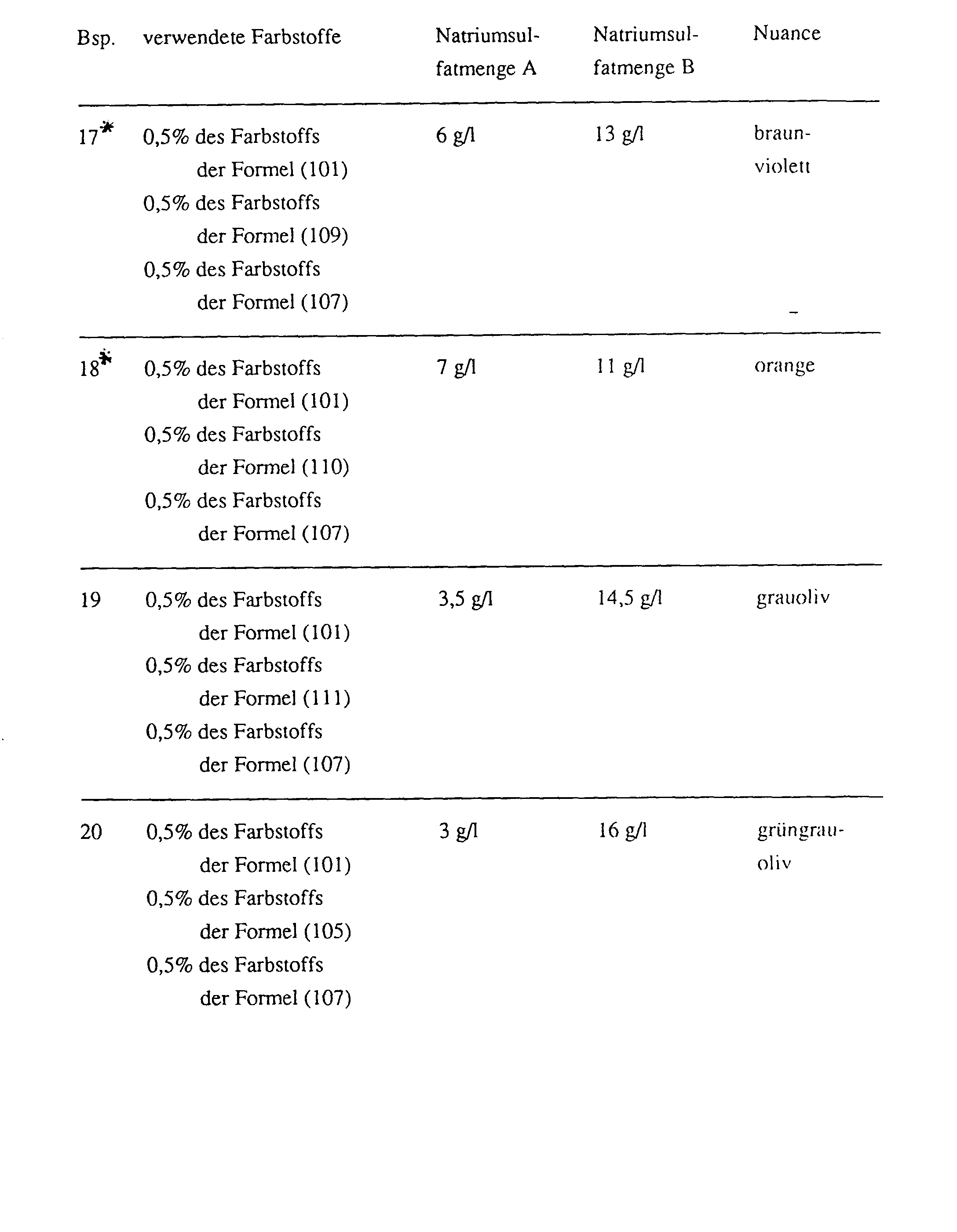

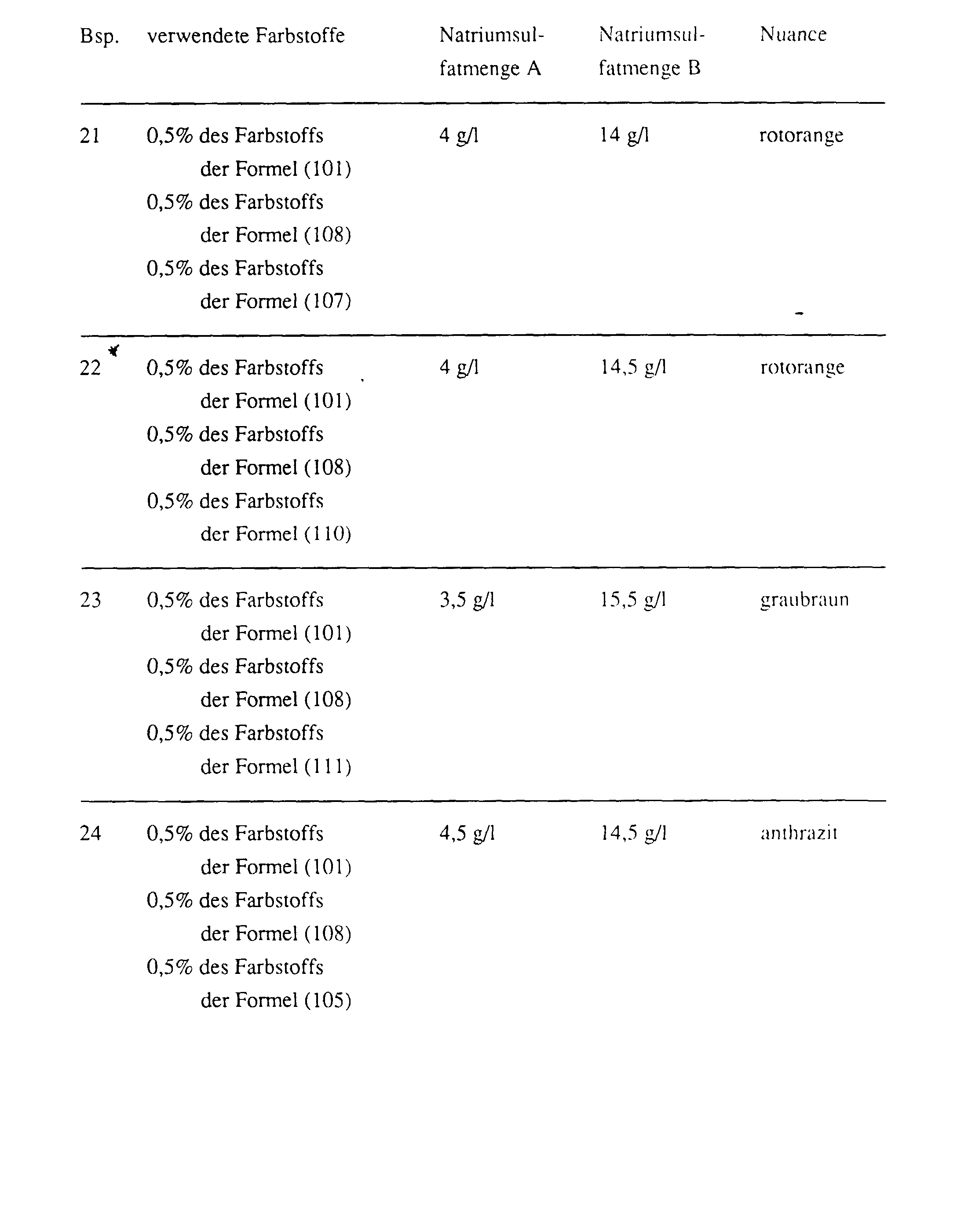

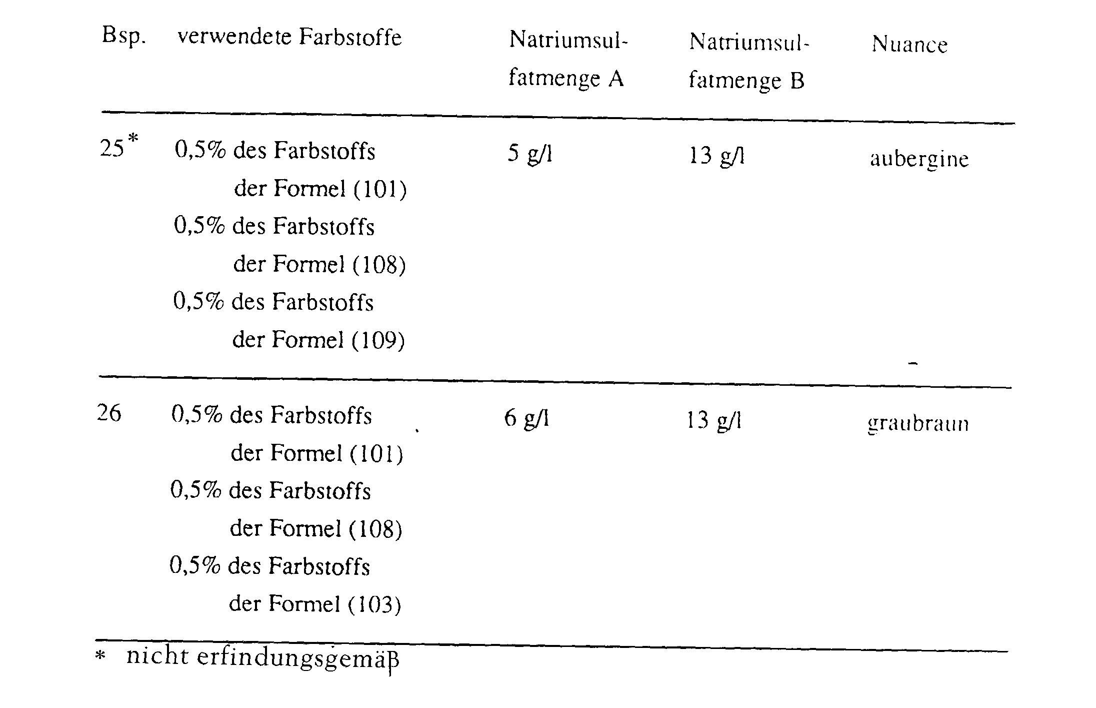

Auflistung der in der obigen Tabelle angegebenen Farbstoffe der Formeln (104) bis (111):

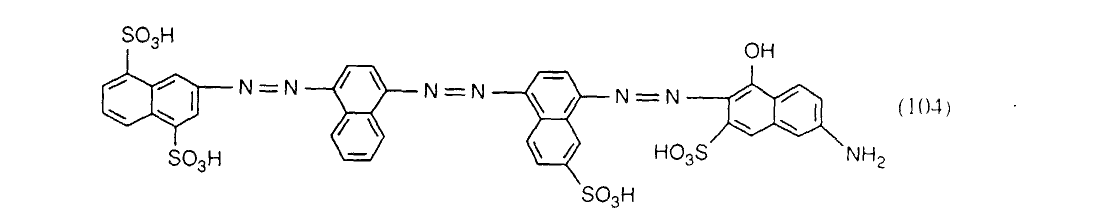

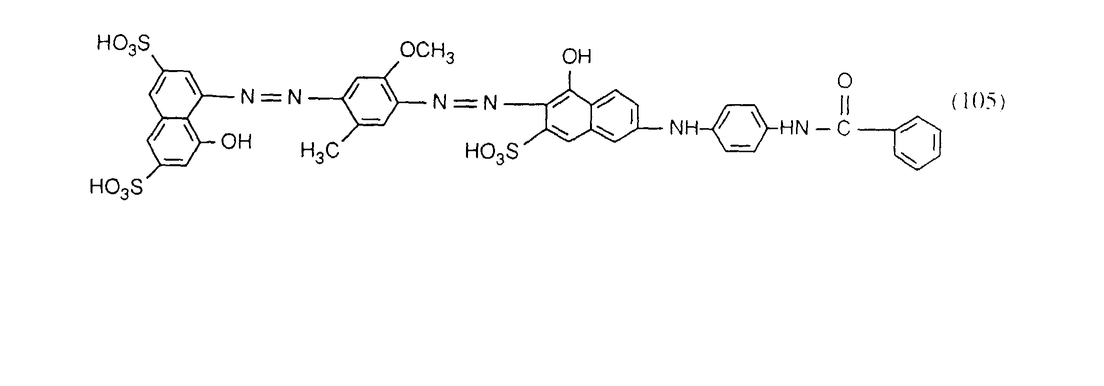

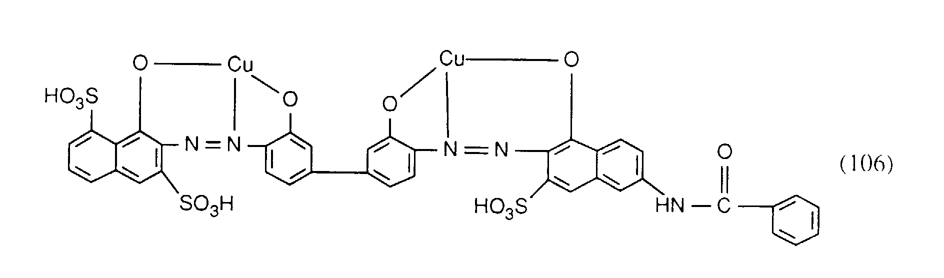

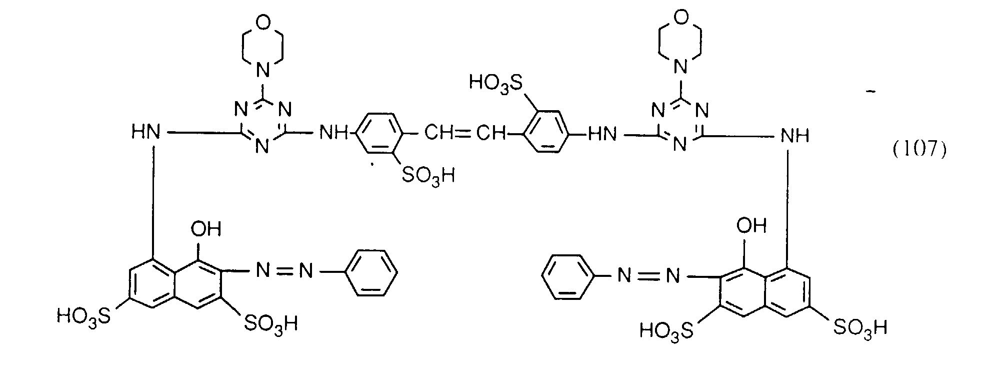

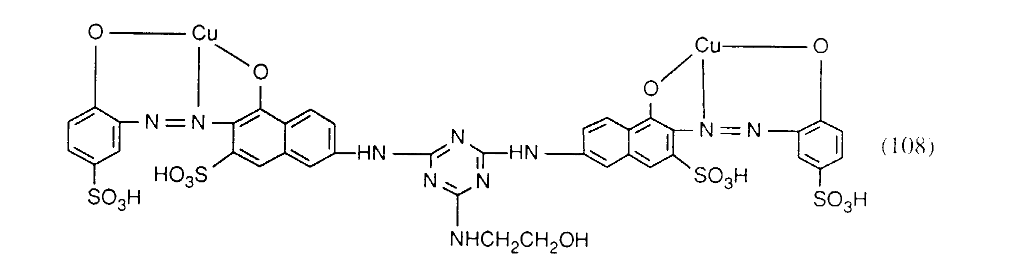

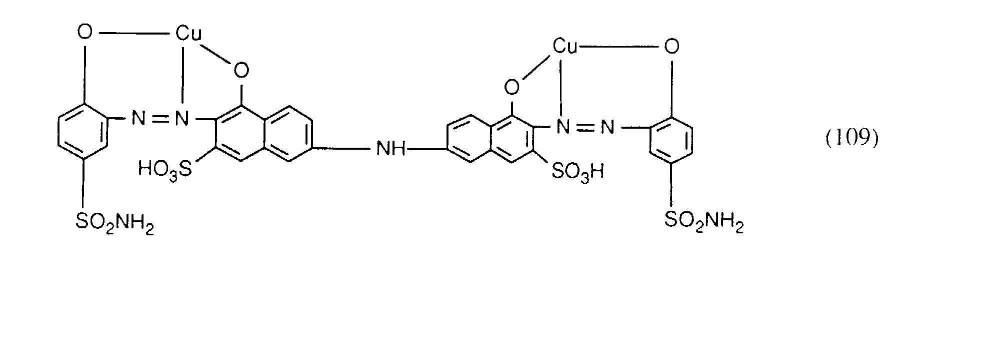

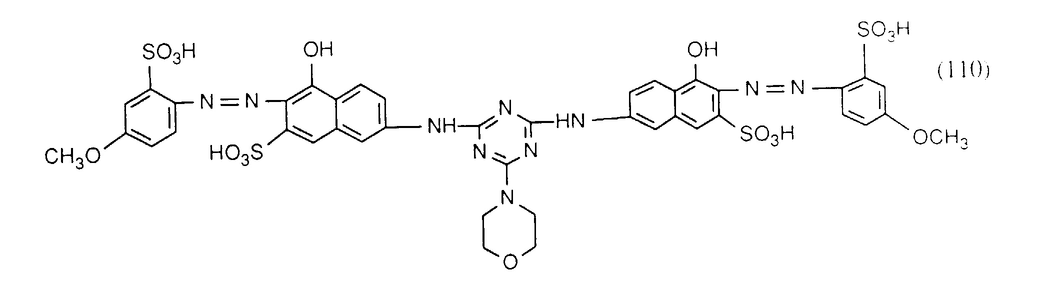

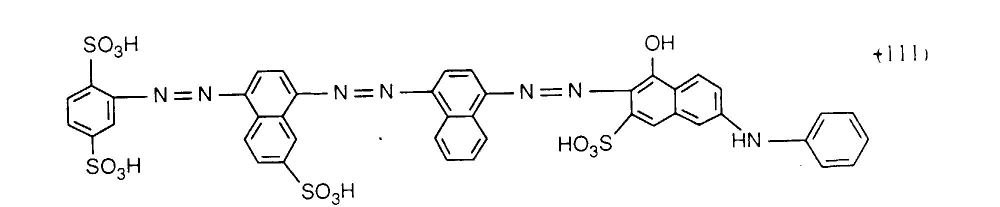

Beispiel 27: 250,8 Teile gut eingenetzter Polyester/Baumwolle Maschenware, welche auf 100 Teile 30 Teile Polyester und 70 Teile Baumwolle enthält, werden bei einer Temperatur von 60°C in eine Hochtemperatur-Jetfärbeapparatur gegeben. Das Flottenverhältnis beträgt 1:7. Anschliessend werden dem Färbebad folgende Hilfsmittel zugesetzt:
0,75 g/l eines handelsüblichen Gleitmittels (Oxyalkylen-Polyesterkondensat-Typ).
0,3 g/l eines silikonfreien Penetrationsbeschleunigers auf Maleinsäureesterbasis.
1 g/l eines Egalisierhilfsmittels (Ammoniumsalz eines säuremodifizierten Polyhydroxyalkylenglykoläthers),
2 g/l Mononatriumdihydrogenphosphat-Puffer,
2 g/l Natrium-m-nitrobenzolsulfonat und
10 g/l Natriumsulfat.

Nun wird der pH mit Essigsäure auf einen Wert von 5 gestellt. Die Färbeflotte wird 5 Minuten bei einer Temperatur von 60°C belassen und anschliessend wird eine Farbstoffmischung, die 0,74 Teile des Farbstoffs der Formel (101), 0,45 Teile des Farbstoffs der Formel (102), 0,48 Teile des Farbstoffs der Formel (103), 0,21 Teile eines gelbfärbenden Dispersionsfarbstoffes der Formel 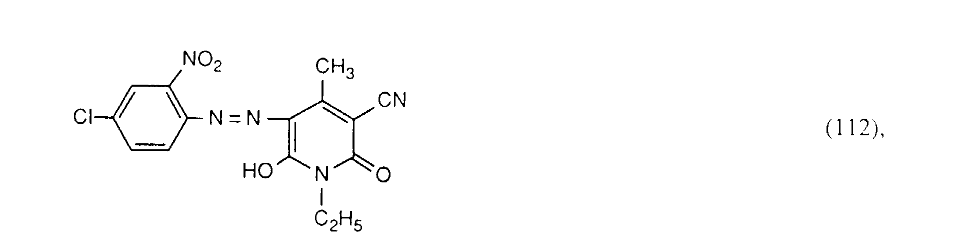 0,19 Teile eines rotfärbenden Dispersionsfarbstoffes der Formel 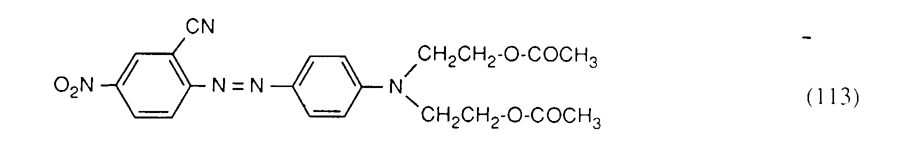 und 0,17 Teile eines blaufärbenden Dispersionsfarbstoffes der Formel 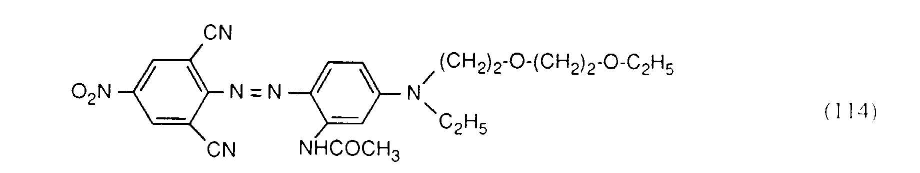 enthält, dem Färbebad zugegeben. Dann wird das Färbebad mit einer Aufheizrate von 2°C/Minute auf eine Temperatur von 130°C erhitzt, diese Temperatur 30 Minuten gehalten und anschliessend wird mit einer Abkühlrate von 1,5°C/Minute auf eine Temperatur von 80°C abgekühlt. Das Färbebad wird 15 Minuten bei der Temperatur von 80°C belasssen. Nun wird das Färbebad abgelassen und das gefärbte Material zweimal je 5 Minuten mit 30°C warmem Wasser gewaschen. Zur Fertigstellung der Färbung wird das Färbegut in üblicher Weise getrocknet oder mit einem kationischen Nachbehandlungsmittel veredelt. Als Nachbehandlungsmittel kommen z.B. solche auf der Basis von polymerisierten quarternären Diallylammoniumverbindungen in Betracht, wie z.B. die in der EP-A-438 380 angegebenen. Das erhaltene Färbegut weist eine hellolivbraune Färbung von ausgezeichneter Egalität auf.

## Patentansprüche

1. Verfahren zum Trichromie-Färben oder Bedrucken von hydroxylgruppenhaltigen Fasermaterialien, dadurch gekennzeichnet, dass man mindestens einen gelb- oder orangefärbenden Farbstoff der Formel 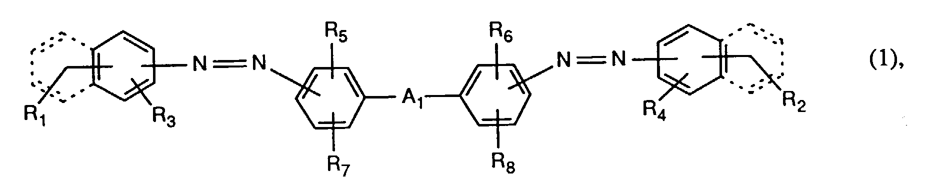 worin
R₁ und R₂ Wasserstoff, C₁-C₈-Alkyl, C₁-C₈-Alkoxy, Halogen, Carboxy, Sulfo, Ureido, gegebenenfalls im Alkylteil substituiertes C₂-C₆-Alkanoylamino oder gegebenenfalls substituiertes Arylazo,
R₃, R₄, R₅, R₆, R₇ und R₈ Wasserstoff, C₁-C₈-Alkyl, C₁-C₈-Alkoxy, Halogen, Carboxy, Sulfo, Ureido oder gegebenenfalls im Alkylteil substituiertes C₂-C₆-Alkanoylamino bedeuten und
A₁ ein Rest der Formel 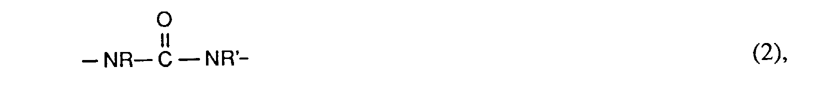 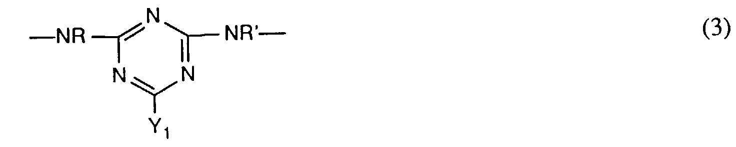 oder 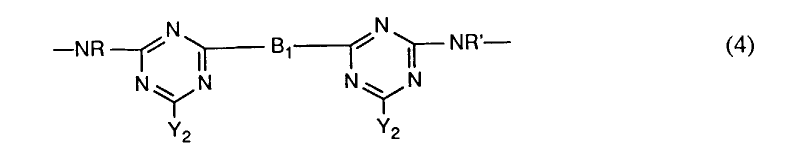 ist, wobei R und R' Wasserstoff oder gegebenenfalls substituiertes C₁-C₈-Alkyl,
Y₁ im Rest der Formel (3) und Y₂ im Rest der Formel (4) Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl bedeuten und
B₁ im Rest der Formel (4) ein Brückenglied ist,
zusammen mit mindestens einem blaufärbenden Farbstoff der Formeln (13), (14) und (15) 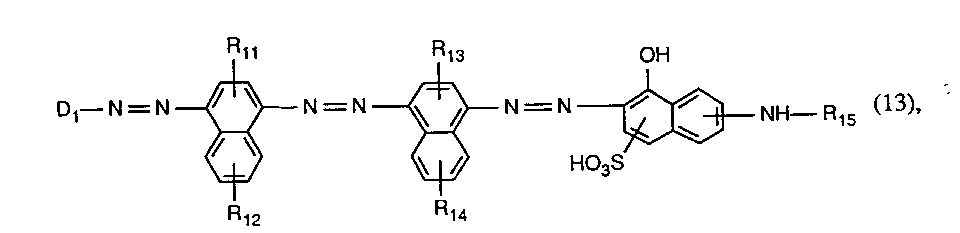
worin D₁ gegebenenfalls substituiertes Phenyl oder Naphthyl,
R₁₁, R₁₂, R₁₃ und R₁₄ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und
R₁₅ Wasserstoff, gegebenenfalls substituiertes C₁-C₈-Alkyl, gegebenenfalls im Alkylteil substituiertes C₂-C₆-Alkanoyl oder gegebenenfalls im Phenylring substituiertes Phenyl oder Benzoyl bedeutet, 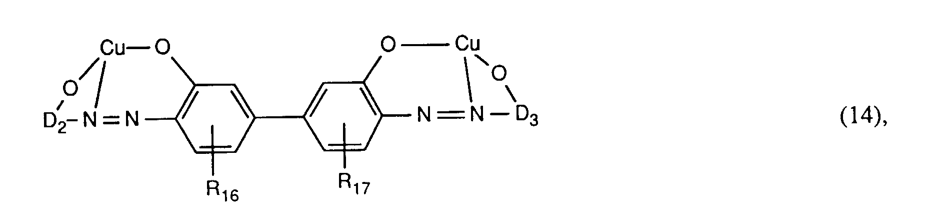
worin D₂ und D₃ gegebenenfalls substituiertes Naphthyl und
R₁₆ und R₁₇ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten, 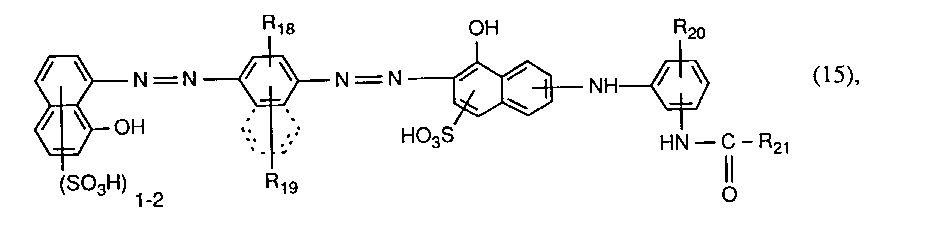
worin R₁₈, R₁₉ und R₂₀ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und
R₂₁ gegebenenfalls substituiertes C₁-C₈-Alkyl oder Phenyl ist, und
zusammen mit mindestens einem rotfärbenden Farbstoff der Formeln (20), (21), (22), (23) und (24) 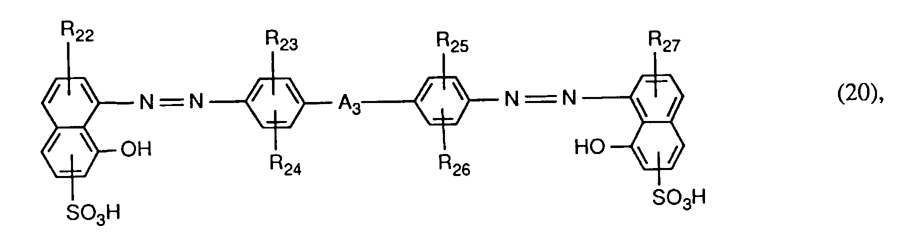
worin R₂₂, R₂₃, R₂₄, R₂₅, R₂₆ und R₂₇ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und
A₃ ein Rest der Formel
-NH-, 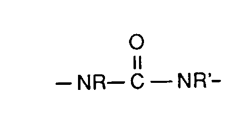
oder 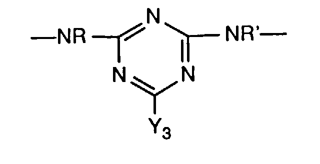 ist, wobei R und R' Wasserstoff oder gegebenenfalls substituiertes C₁-C₈-Alkyl und Y₃ Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl bedeuten, 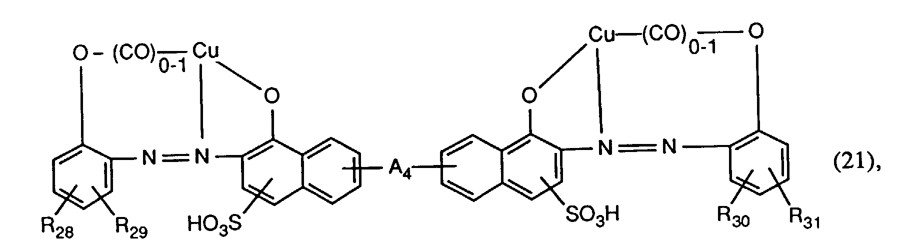
worin R₂₈, R₂₉, R₃₀ und R₃₁ Wasserstoff, gegebenenfalls substituiertes C₁-C₈-Alkyl oder C₁-C₈-Alkoxy, Halogen, Carboxy, Sulfo, Ureido, Sulfamoyl oder gegebenenfalls im Alkylteil substituiertes C₂-C₆-Alkanoylamino sind und
A₄ die oben unter Formel (20) für A₃ angegebenen Bedeutungen hat, 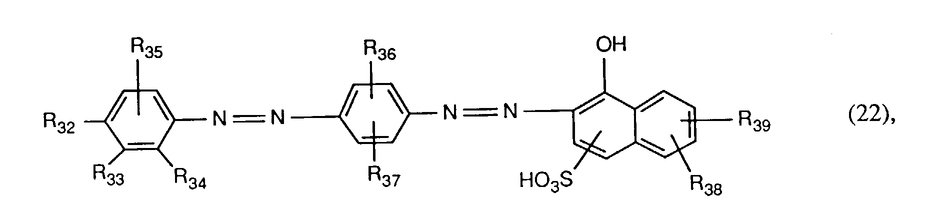
worin R₃₂, R₃₃, R₃₄, R₃₅, R₃₆, R₃₇ und R₃₈ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind und
R₃₉ gegebenenfalls im Phenylring substituiertes Benzoylamino oder ein gegebenenfalls im Phenylring weitersubstituierter Rest der Formel 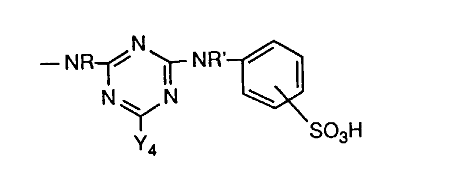 ist, wobei R und R' Wasserstoff oder gegebenenfalls substituiertes C₁-C₈-Alkyl und
Y₄ die oben unter Formel (20) für Y₃ angegebenen Bedeutungen hat, 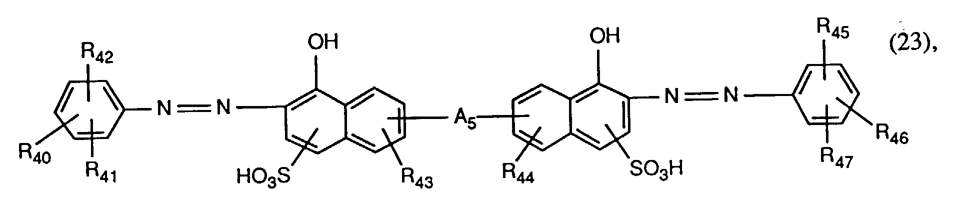
worin R₄₀, R₄₁, R₄₂, R₄₃, R₄₄, R₄₅, R₄₆ und R₄₇ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind wobei R₄₀ und R₄₆ zusätzlich gegebenenfalls im Phenylring substituiertes Phenylazo bedeuten können, und
A₅ die oben unter Formel (20) für A₃ angegebenen Bedeutungen hat oder ein Rest der Formel 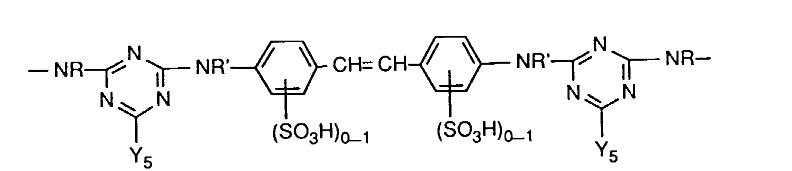 ist, wobei R und R' Wasserstoff oder gegebenenfalls substituiertes C₁-C₈-Alkyl sind und
Y₅ die oben unter Formel (20) für Y₃ angegebenen Bedeutungen hat, 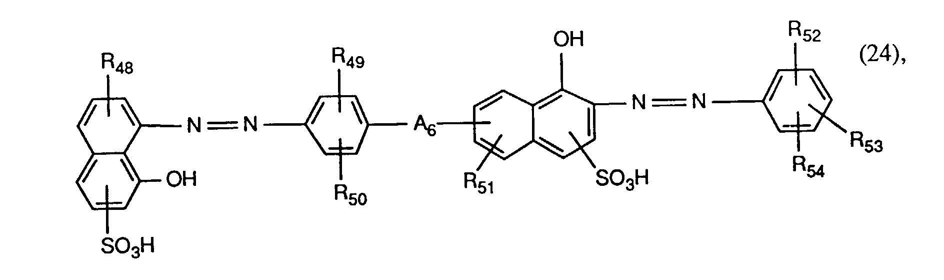
worin R₄₈, R₄₉, R₅₀, R₅₁, R₅₂, R₅₃ und R₅₄ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und
A₆ die oben unter Formel (20) für A₃ angegebenen Bedeutungen hat, verwendet.

2. Verfahren gemäss Anspruch 1, dadurch gekennzeichnet, dass R₁, R₂, R₃, R₄, R₅, R₆, R₇ und R₈ Wasserstoff, C₁-C₄-Alkyl, C₁-C₄-Alkoxy, C₂-C₄-Alkanoylamino, Halogen oder Sulfo sind.

3. Verfahren gemäss einem der Ansprüche 1 und 2, dadurch gekennzeichnet, dass R₁, R₂, R₃ und R₄ Wasserstoff oder Sulfo sind.

4. Verfahren gemäss einem der Ansprüche 1 bis 3, dadurch gekennzeichnet, dass Y₁ und Y₂ Chlor, Amino, unsubstituiertes oder im Alkylteil durch Hydroxy substituiertes N-Mono- oder N,N-Di-C1-C4-Alkylamino, Phenylamino oder Morpholino, insbesondere Morpholino oder Chlor, sind.

5. Verfahren gemäss einem der Ansprüche 1 bis 4, dadurch gekennzeichnet, dass B₁ ein Brückenglied der Formel
-NR-(CH₂)₂₋₄-NR'- (5), 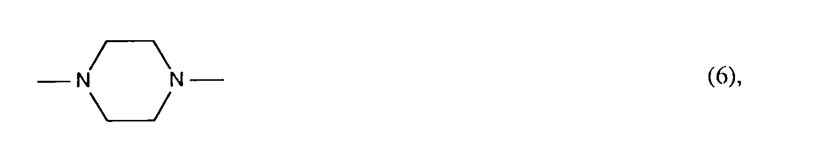 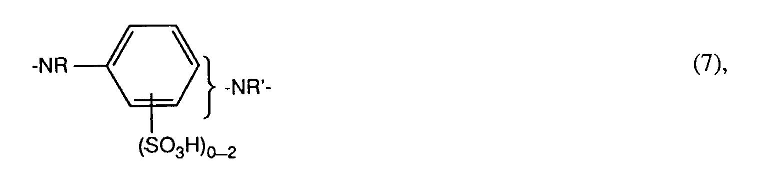 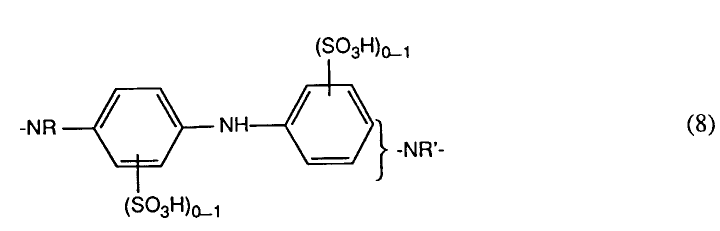
oder 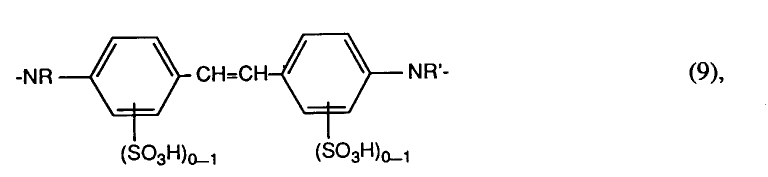 insbesondere ein Brückenglied der Formel (6) ist, wobei R und R' Wasserstoff oder gegebenenfalls substituiertes C₁-C₈-Alkyl bedeuten.

6. Verfahren gemäss einem der Ansprüche 1 bis 5, dadurch gekennzeichnet, dass man als Farbstoff der Formel (1) einen Farbstoff der Formel 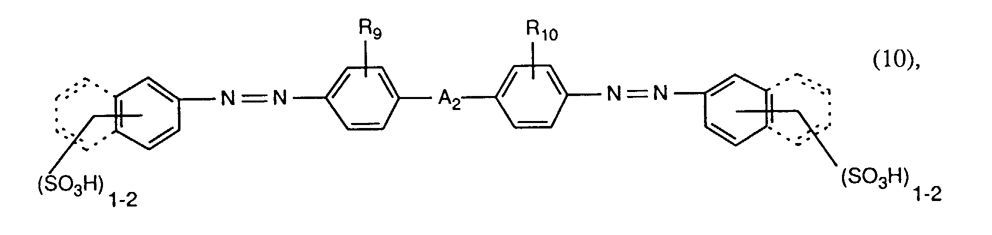 verwendet, worin R₉ und R₁₀ Wasserstoff, C₁-C₄-Alkyl, C₁-C₄-Alkoxy, C₂-C₄-Alkanoylamino, Halogen oder Sulfo sind und A₂ ein Rest der Formel 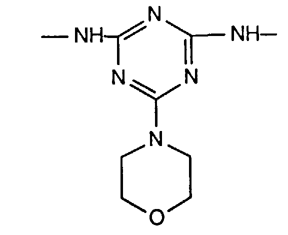 oder 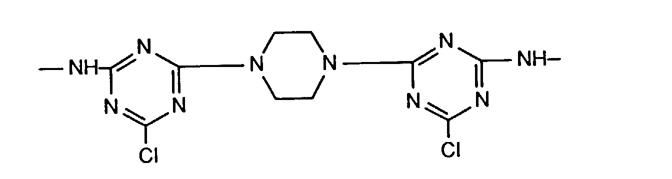 ist.

7. Verfahren gemäss Anspruch 1, dadurch gekennzeichnet, dass man als Farbstoff der Formel (1) einen Farbstoff der Formel 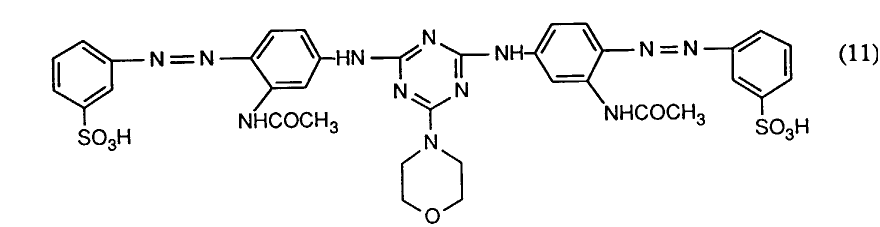 oder 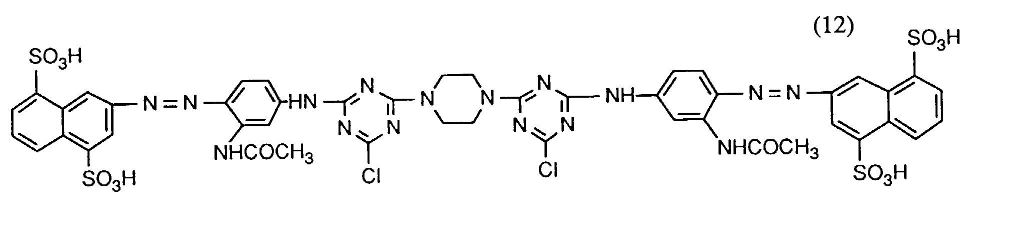 verwendet.

8. Verfahren gemäss einem der Ansprüche 1 bis 7, dadurch gekennzeichnet, dass man als blaufärbenden Farbstoff mindestens einen Farbstoff der Formeln 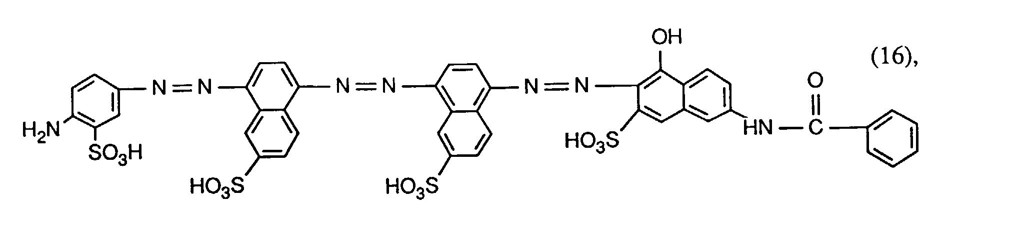 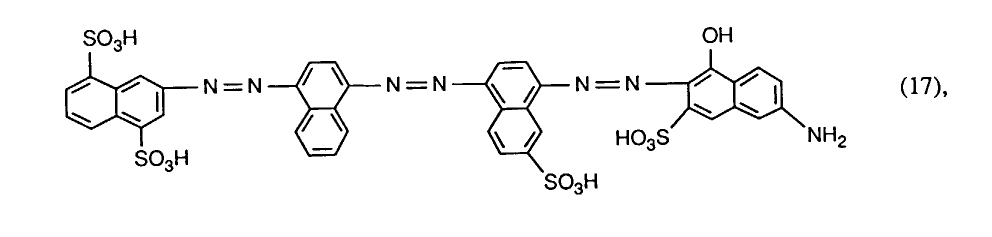 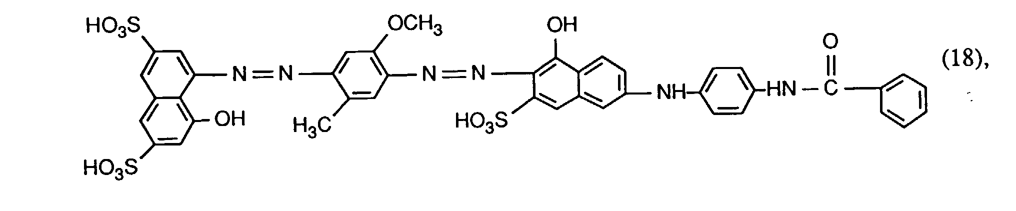 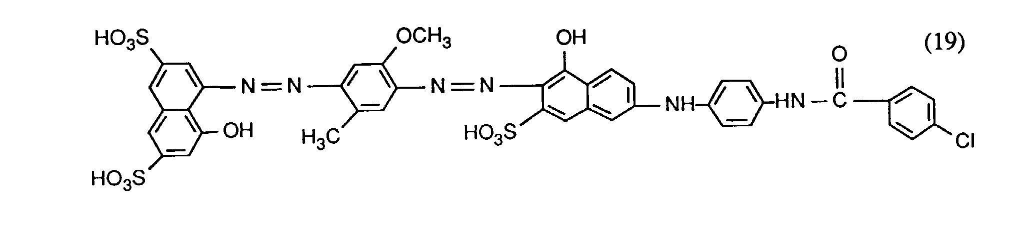 und 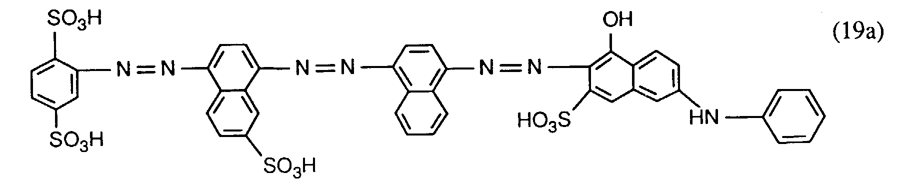 verwendet.

9. Verfahren gemäss einem der Ansprüche 1 bis 8, dadurch gekennzeichnet, dass man als rotfärbenden Farbstoff mindestens einen Farbstoff der Formeln 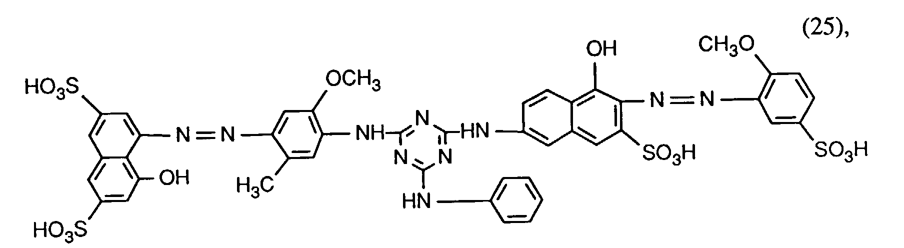 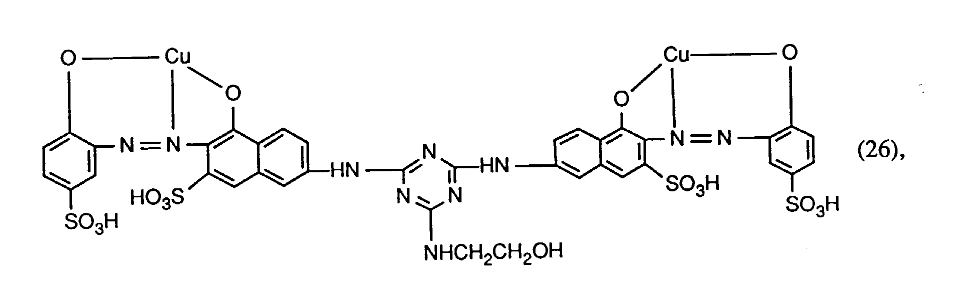 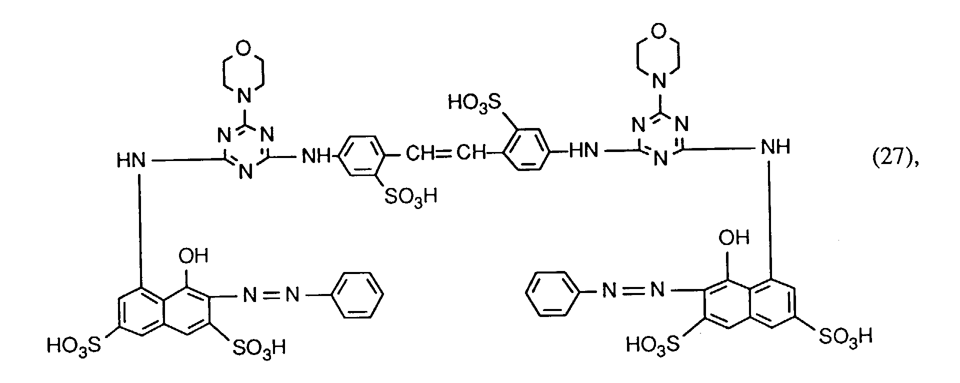 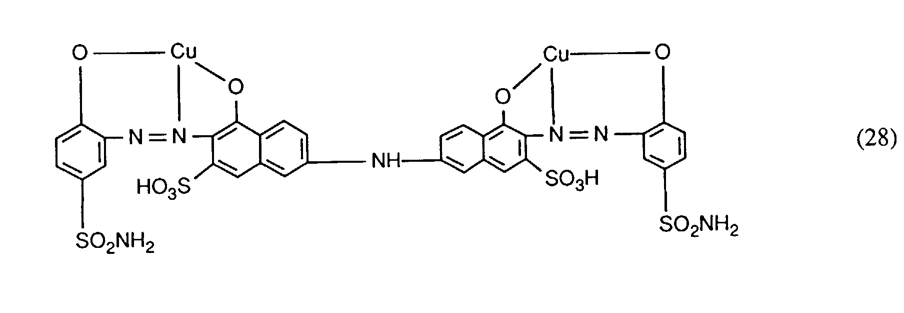 und 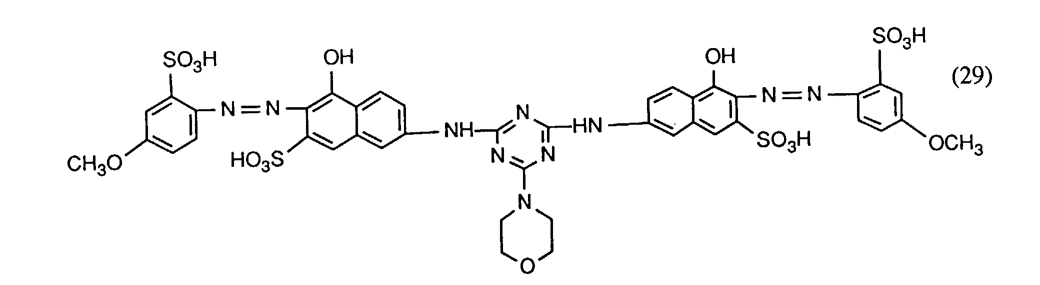 verwendet.

10. Verfahren gemäss Anspruch 1, dadurch gekennzeichnet, dass man mindestens einen der gelb- oder orangefärbenden Farbstoffe der Formeln 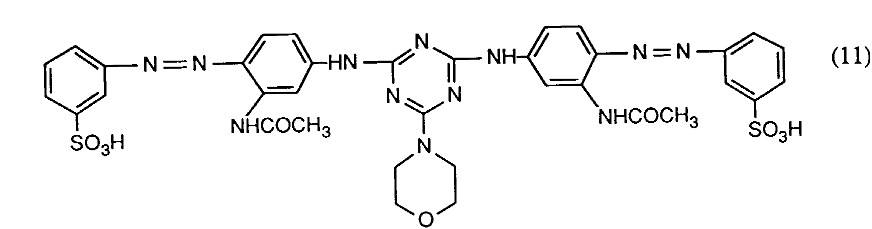 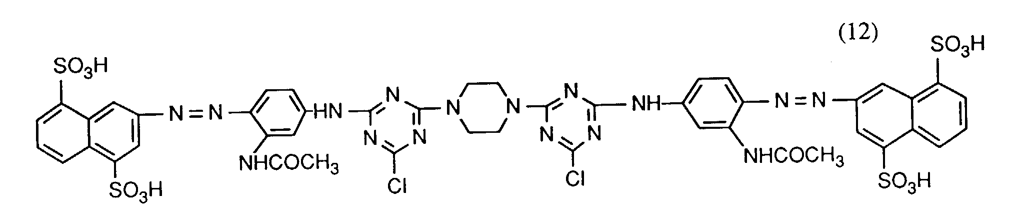 zusammen mit mindestens einem der blaufärbenden Farbstoffe der Formeln 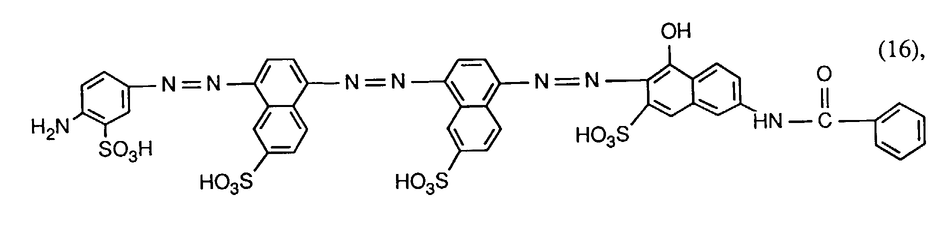 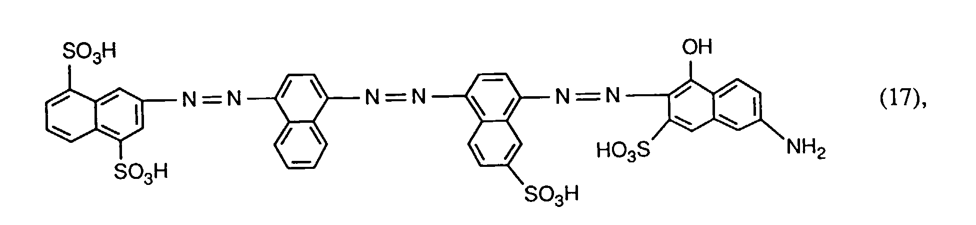 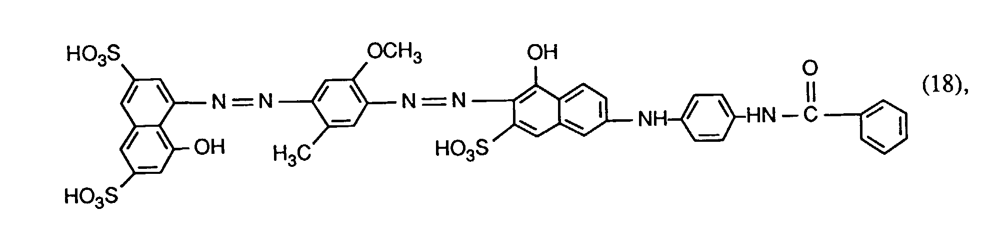 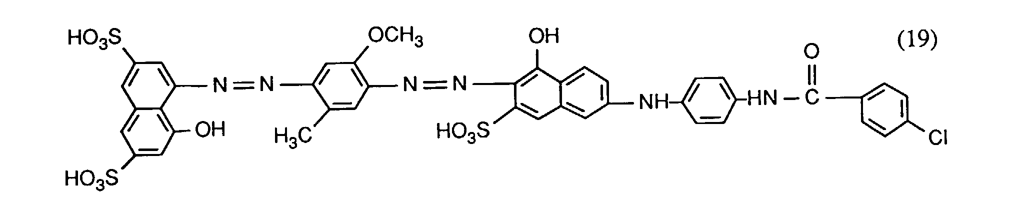 und 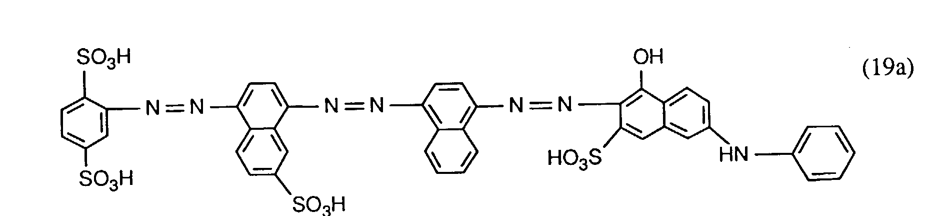 und mindestens einem der rotfärbenden Farbstoffe der Formeln 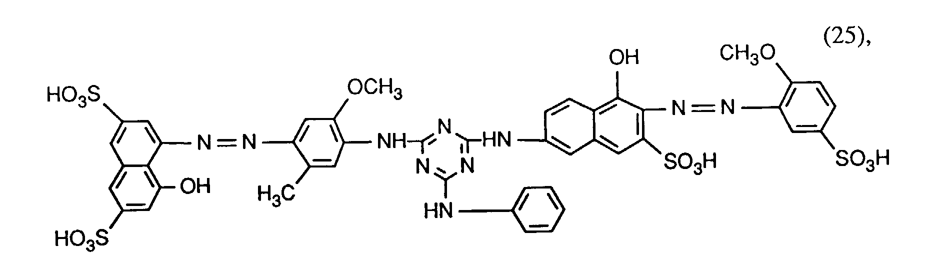 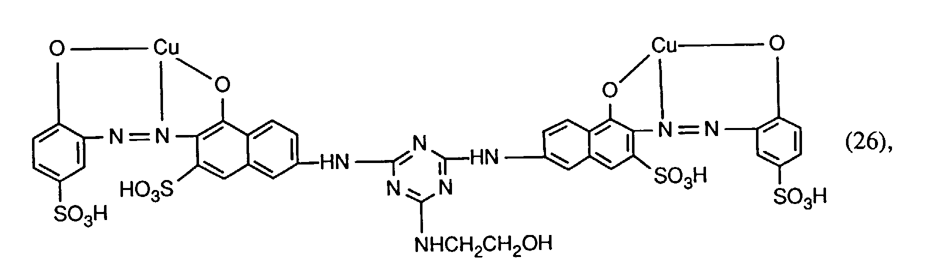 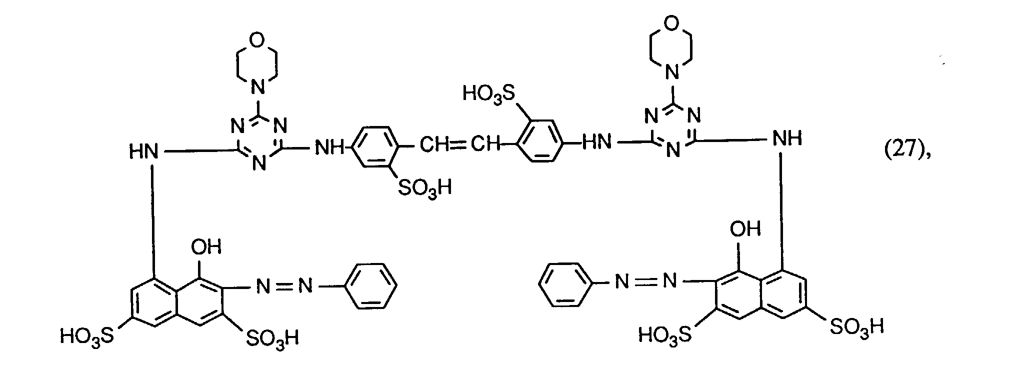 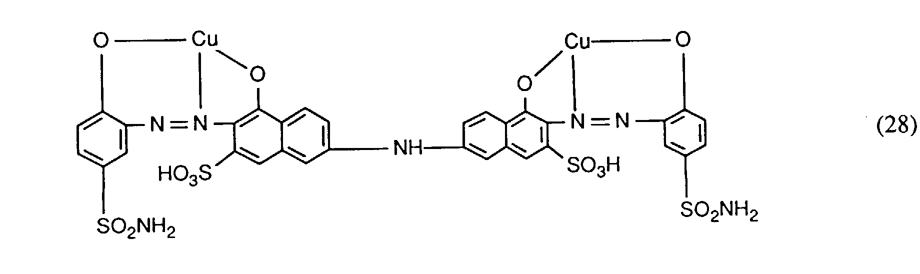 und 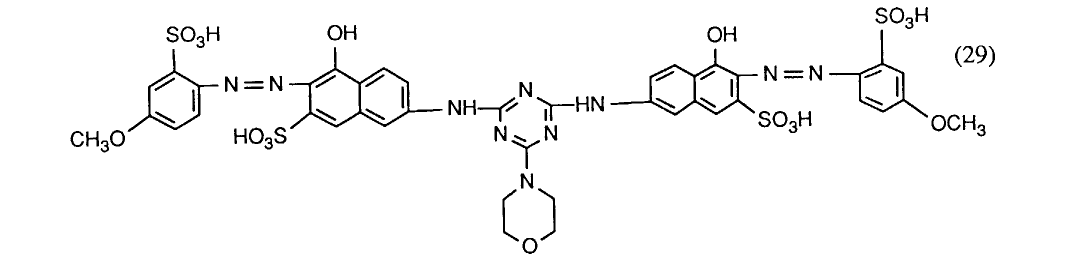 insbesondere einen gelbfärbenden Farbstoff der Formel (11) zusammen mit einem blaufärbenden Farbstoff der Formel (16) und einem rotfärbenden Farbstoff der Formel (25), verwendet.

11. Verfahren gemäss einem der Ansprüche 1 bis 10, dadurch gekennzeichnet, dass man in Gegenwart eines Salzes, insbesondere in Gegenwart eines Alkalihalogenids oder eines Alkalisulfats, färbt, wobei ein Teil der Salzmenge zu Beginn des Färbeprozesses zugegeben wird und ein weiterer Teil kurz vor oder nach Erreichung der Färbetemperatur als ganzes oder portionsweise zugegeben wird.

12. Verfahren gemäss Anspruch 11, dadurch gekennzeichnet, dass man eine von der Gesamtmenge der verwendeten Farbstoffe abhängende Gesamtmenge an Salz verwendet

13. Verfahren gemäss einem der Ansprüche 1 bis 12, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Synthesefasern unter den Färbebedingungen für die Synthesefasern färbt.

14. Verfahren gemäss Anspruch 13, dadurch gekennzeichnet, dass man Polyester/Baumwoll-Mischgewebe in einem einstufigen, einbadigen Verfahren färbt, wobei man neben einer Farbstoffmischung gemäss einem der Ansprüche 1 bis 10 einen Dispersionsfarbstoff verwendet und aus wässriger Flotte bei Temperaturen im Bereich von 100 bis 150°C, vorzugsweise 120 bis 130°C, und einem pH-Wert zwischen 4 und 7,5 färbt.

15. Das gemäss einem der Ansprüche 1 bis 14 gefärbte Material, insbesondere das Textilmaterial.

## Claims

1. A process for the trichromatic dyeing or printing of hydroxyl-containing fibre materials, which comprises using at least one yellow or orange dyeing dye of formula 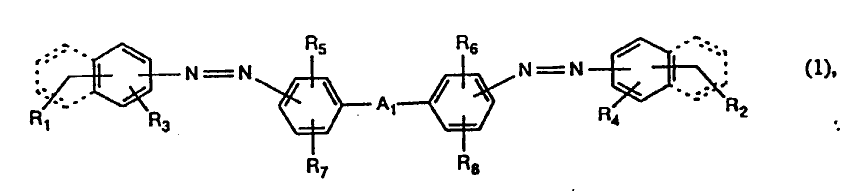 wherein R₁ and R₂ are hydrogen, C₁-C₈alkyl, C₁-C₈alkoxy, halogen, carboxy, sulfo, ureido, C₂-C₆alkanoulamino which is unsubstituted or substituted in the alkyl moiety, or unsubstituted or substituted arylazo, R₃, R₄, R₅, R₆, R₇ and R₈ are hydrogen, C₁-C₈alkyl, C₁-C₈alkoxy, halogen, carboxy, sulfo, ureido or C₂-C₆alkanoylamino which is unsubstituted or substituted in the alkyl moiety, and A₁ is a radical of formula 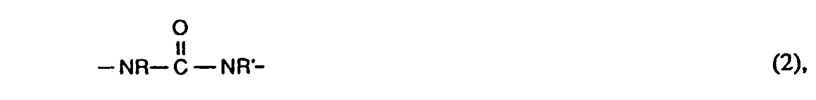 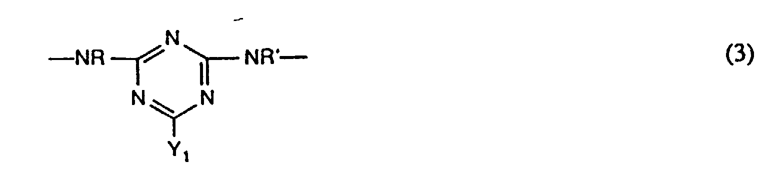 or 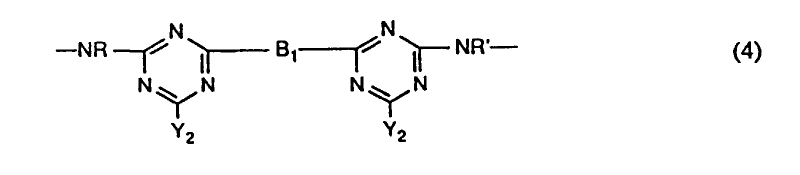 wherein R and R' are hydrogen or unsubstituted or substituted C₁-C₈alkyl, Y₁ in the radical of formula (3) and Y₂ in the radical of formula (4) are hydroxy, C₁-C₄alkoxy, chloro, bromo, C₁-C₄alkylthio, amino, N-mono or N,N-di-C₁-C₄alkylamino each of which is unsubstituted or substituted in the alkyl moiety by hydroxy, sulfo, carboxy or C₁-C₄alkoxy, or cyclohexylamino, phenylamino or N-C₁-C₄alkyl-N-phenylamino each of which is unsubstituted or substituted in the phenyl moiety by C₁-C₄alkyl, C₁-C₄alkoxy, carboxy, sulfo and/or halogen, or are morpholino or 3-carboxy-or 3-carbamoylpyridin-l-yl, and B₁ in the radical of formula (4) is a linking group, together with at least one blue dyeing dye of formulae (13), (14) and (15) 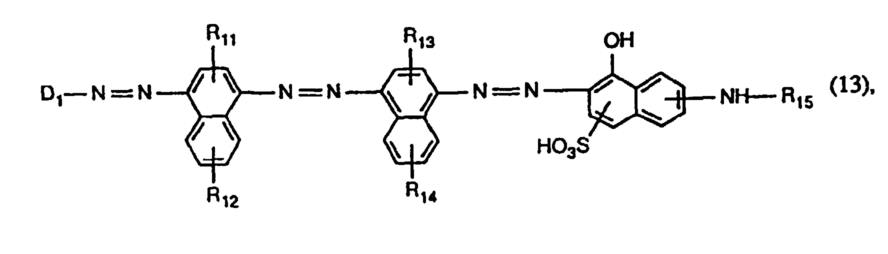 wherein D₁ is unsubstituted or substituted phenyl or naphthyl, R₁₁, R₁₂, R₁₃ and R₁₄ are hydrogen, unsubstituted or substituted C₁-C₈alkyl or C₁-C₈alkoxy, halogen, carboxy, sulfo, ureido or C₂-C₆alkanoylamino which is unsubstituted or substituted in the alkyl moiety, and R₁₅ is hydrogen, unsubstituted or substituted C₁-C₈alkyl, unsubstituted C₂-C₆alkanoyl or C₂-C₆alkanoyl which is substituted in the alkyl moiety, or phenyl or benzoyl each of which is unsubstituted or substituted in the phenyl ring, 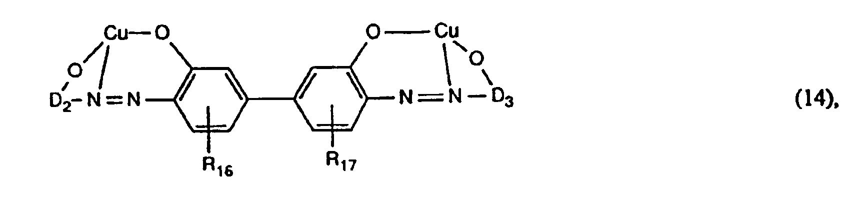 wherein D₂ and D₃ and unsubstituted or substituted naphthyl, and R₁₆ and R₁₇ are hydrogen, unsubstituted or substituted C₁-C₈alkyl or C₁-C₈alkoxy, halogen, carboxy, sulfo, ureido or C₂-C₆alkanoylamino which is unsubstituted or substituted in the alkyl moiety, 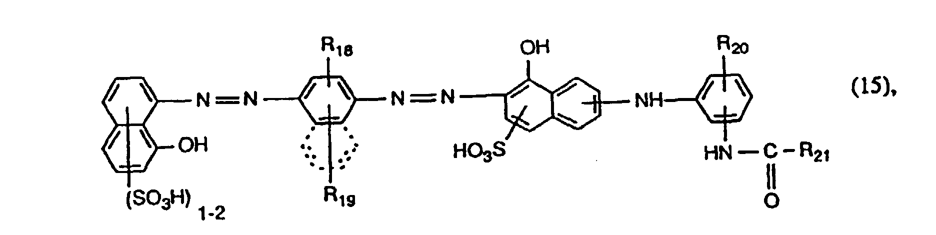 wherein R₁₈, R₁₉ and R₂₀ are hydrogen, unsubstituted or substituted C₁-C₈alkyl or C₁-C₈alkoxy, halogen, carboxy, sulfo, ureido or C₂-C₆alkanoylamino which is unsubstituted or substituted in the alkyl moiety, and R₂₁ is unsubstituted or substituted C₁-C₈alkyl or phenyl, and together with at least one red dyeing dye of formulae (20), (21), (22), (23) and (24) 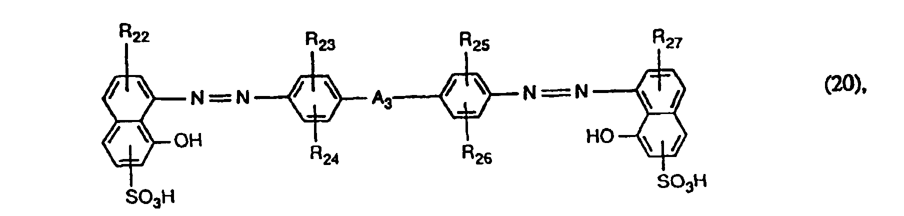 wherein R₂₂, R₂₃, R₂₄, R₂₅ R₂₆ and R₂₇ are hydrogen, unsubstituted or substituted C₁-C₈alkyl or C₁-C₈alkoxy, halogen, carboxy, sulfo, ureido or C₂-C₆alkanoylamino which is unsubstituted or substituted in the alkyl moiety, and A₃ is a radical of formula
-NH-, 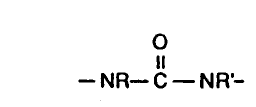
or 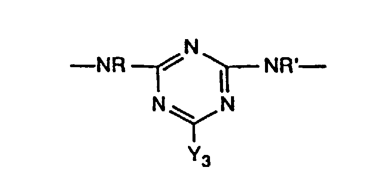 wherein R and R' are hydrogen or unsubstituted or substituted C₁-C₈alkyl, and Y₃ is hydroxy, C₁-C₄alkoxy, chloro, bromo, C₁-C₄alkylthio, amino, N-mono- or N,N-di-C₁-C₄alkylamino each of which is unsubstituted or substituted in the alkyl moiety by hydroxy, sulfo, carboxy or C₁-C₄alkoxy, or cyclohexylamino, phenylamino or N-C₁-C₄alkyl-N-phenylamino each of which is unsubstituted or substituted in the phenyl moiety by C₁-C₄alkyl, C₁-C₄alkoxy, carboxy, sulfo and/or halogen, or is morpholino or 3-carboxy- or 3-carbamoylpyridin-1-yl, 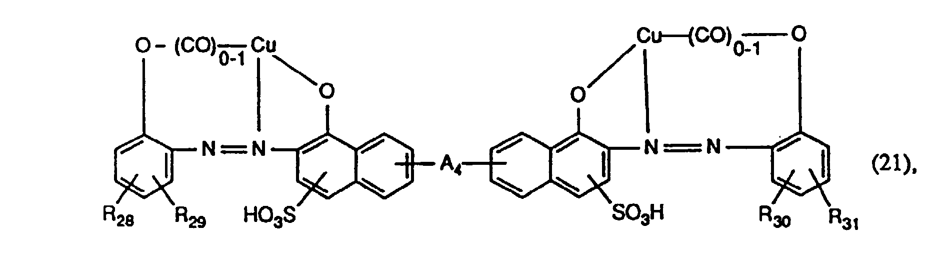 wherein R₂₈, R₂₉, R₃₀ and R₃₁ are hydrogen, unsubstituted or substituted Cᵢ-C₈alkyl or C₁-C₈alkoxy, halogen, carboxy, sulfo, ureido, sulfamoyl or C₂-C₆alkanoylamino which is unsubstituted or substituted in the alkyl moiety, and A₄ is as defined for A₃ above under formula (20), 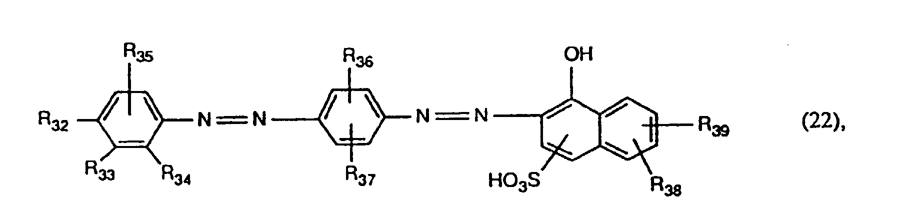 wherein R₃₂, R₃₃, R₃₄, R₃₅, R₃₆, R₃₇ and R₃₈ are hydrogen, unsubstituted or substituted C₁-C₈alkyl or C₁-C₈alkoxy, halogen, carboxy, sulfo, ureido or C₂-C₆alkanoylamino which is unsubstituted or substituted in the alkyl moiety, and R₃₉ is benzoylamino or benzoylamino which is substituted in the phenyl ring, or a radical of formula 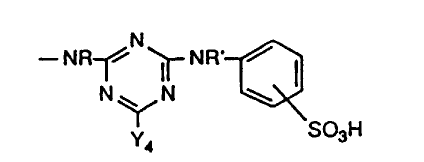 which may be further substituted in the phenyl ring, wherein R and R' are hydrogen or unsubstituted or substituted C₁-C₈alkyl and Y₄ is as defined for Y₃ above under formula (20), 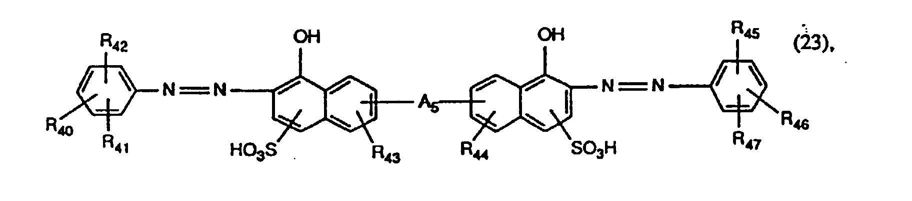 wherein R₄₀, R₄₁, R₄₂, R₄₃, R₄₄, R₄₅, R₄₆ and R₄₇ are hydrogen, unsubstituted or substituted C₁-C₈alkyl or C₁-C₈alkoxy halogen, carboxy, sulfo, ureido or C₂-C₆alkanoylamino which is unsubstituted or substituted in the alkyl moiety, and R₄₀ and R₄₆ may additionally be phenylazo or phenylazo which is substituted in the phenyl ring, and A₅ is as defined for A₃ above under formula (20), or is a radical of formula 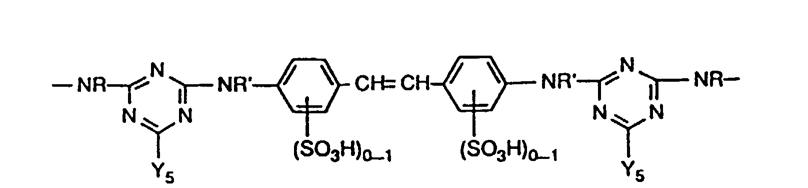 wherein R and R' are hydrogen or unsubstituted or substituted C₁-C₈-alkyl and Y₅ is as defined for Y₃ above under formula (20), 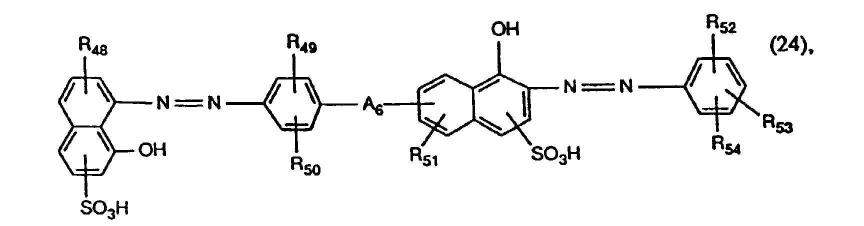 wherein R₄₈, R₄₉, R₅₀, R₅₁, R₅₂, R₅₃ and R₅₄ are hydrogen, unsubstituted or substituted C₁-C₈alkyl or C₁-F_{C}alkoxy, halogen, carboxy, sulfo, ureido or C₂-C₆alkanoylamino which is unsubstituted or substituted in the alkyl moiety, and A₆ is as defined for A₃ above under formula (20).

2. A process according to claim 1, wherein R₁, R₂, R₃, R₄, R₅, R₆, R₇ and R₈ are hydrogen, C₁-C₄alkyl, C₁-C₄alkoxyl C₂-C₄alkanoylamino, halogen or sulfo.

3. A process according to either of claims 1 and 2, wherein R₁, R₂, R₃ and R₄ are hydrogen or sulfo.

4. A process according to any one of claims 1 to 3, wherein Y₁ and Y₂ are chloro, amino, N-mono- or N,N-di-C₁-C₄alkylamino each of which is unsubstituted or substituted in the alkyl moiety by hydroxy, or are phenylamino or morpholino, especially morpholino or chloro.

5. A process according to any one of claims 1 to 4, wherein B₁ is a linking group of formula
-NR-(CH₂)₂₋₄-NR'- (5), 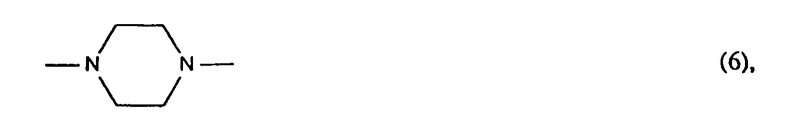 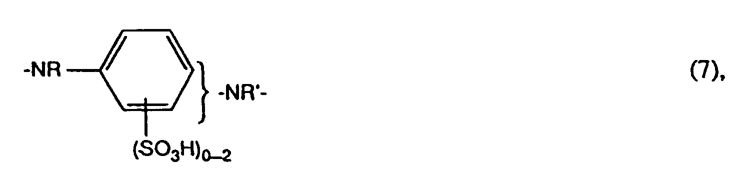 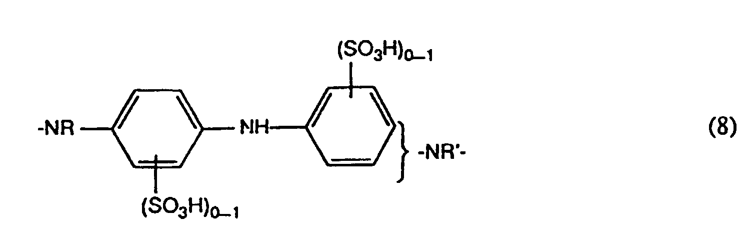
or 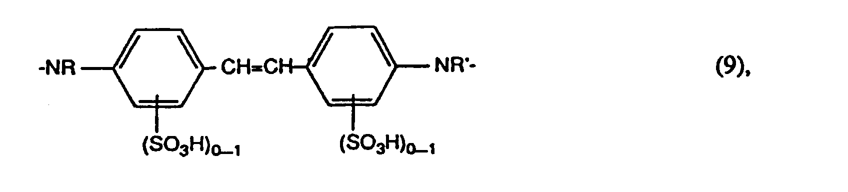 especially a linking group of formula (6), wherein R and R' are hydrogen or unsubstituted or substituted C₁-C₈alkyl.

6. A process according to any one of claims 1 to 5, wherein the dye of formula (1) is a dye of formula 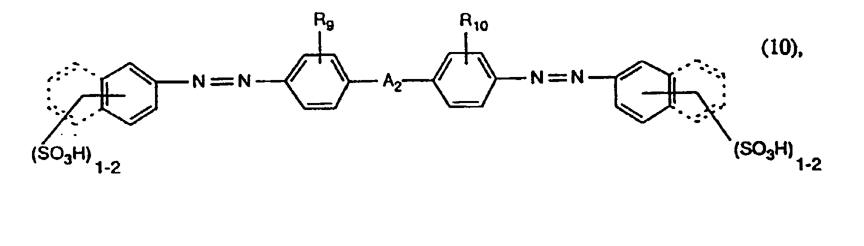 wherein R₉ and R₁₀ are hydrogen, C₁-C₄alkyl, C₁-C₄alkoxyl C₂-C₄alkanoylamino, halogen or sulfo, and A₂ is a radical of formula 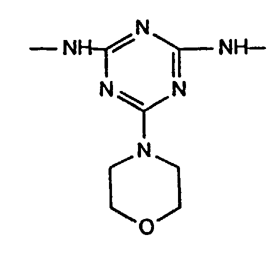 or

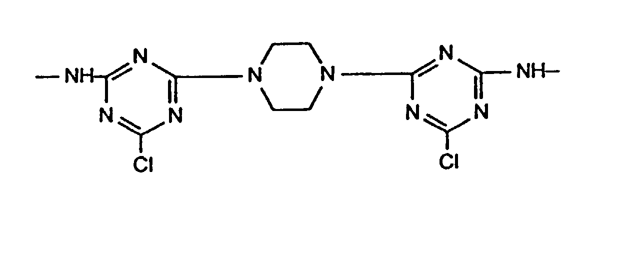

7. A process according to claim 1, wherein the dye of formula (1) is a dye of formula 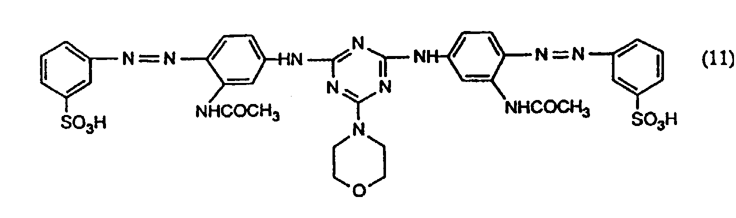 or

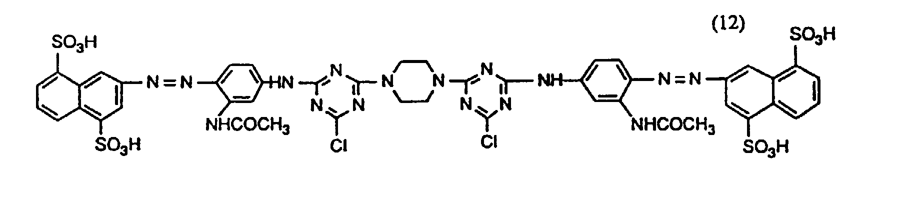

8. A process according to any one of claims 1 to 7, which comprises using as blue dyeing dye at leat one dye of formulae 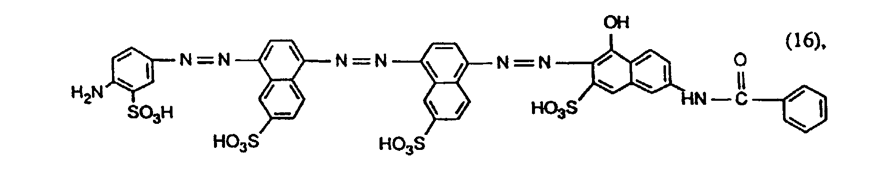 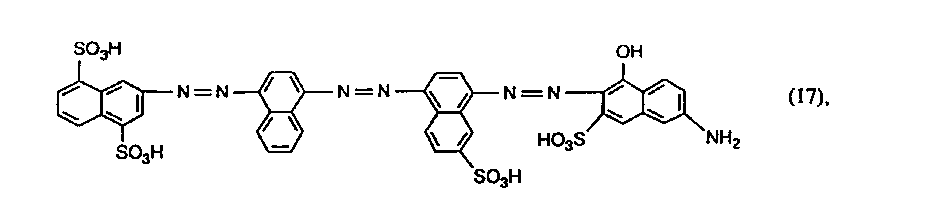 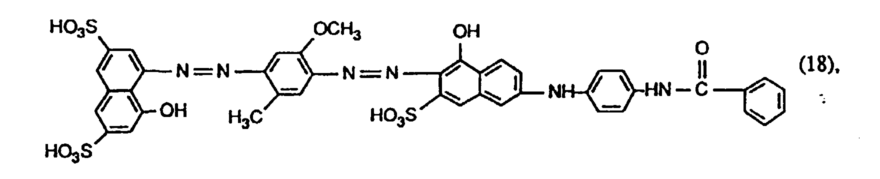 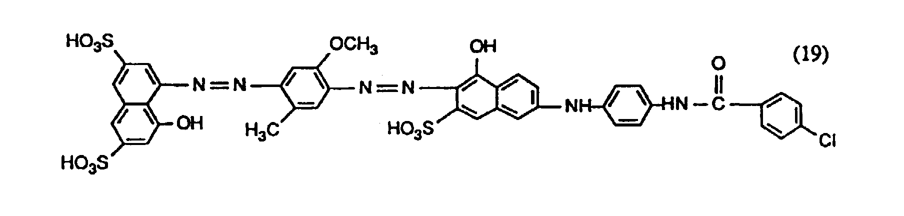 and

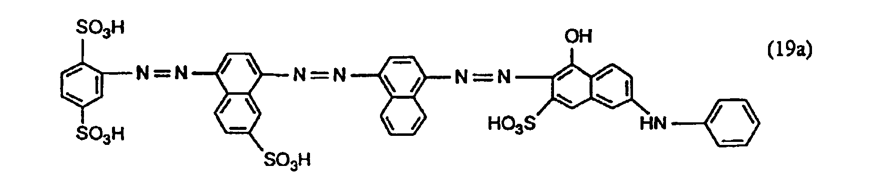

9. A process according to any one of claims 1 to 8, which comprises using as red dyeing dye at least one dye of formulae 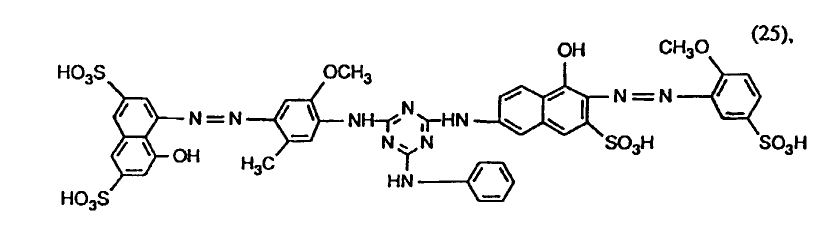 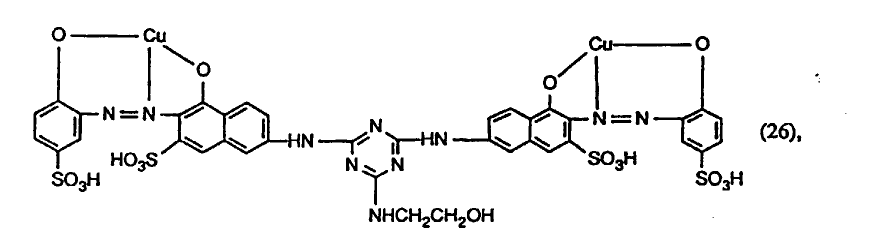 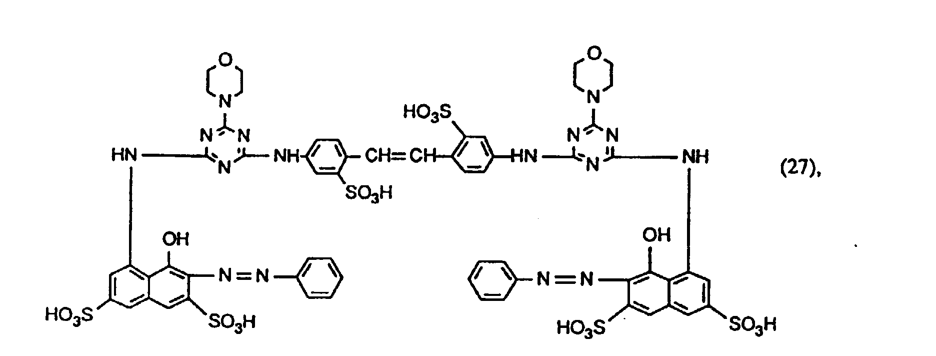 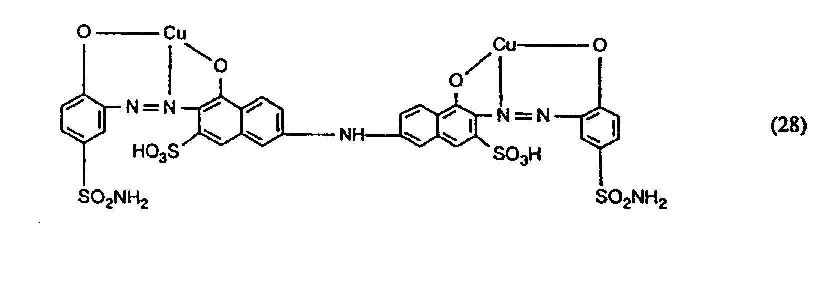 and

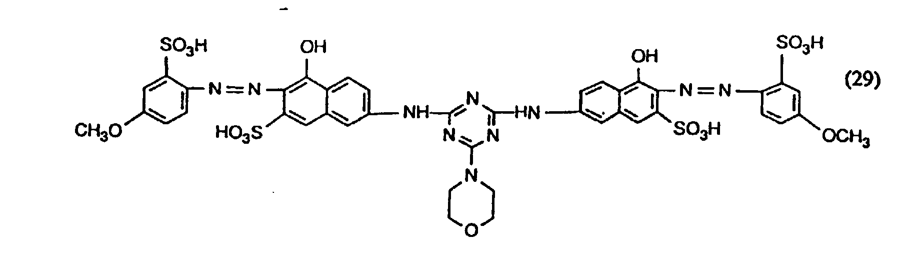

10. A process according to claim 1, which comprises using at least one yellow or orange dyeing dye of formulae 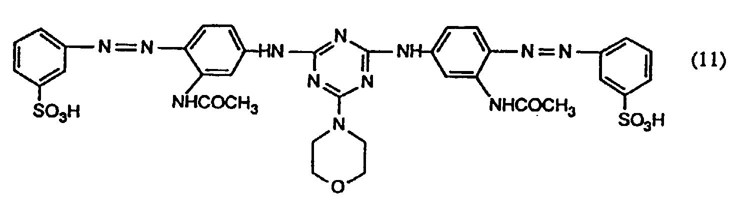 and 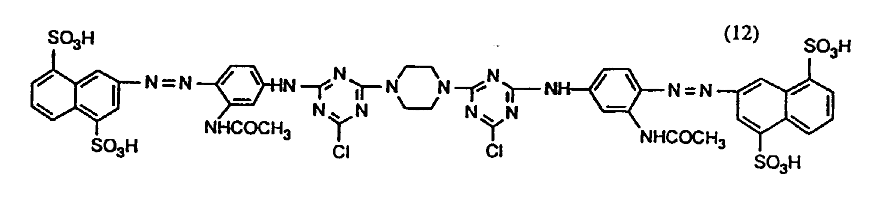 together with at least one of the blue dyeing dyes of formulae 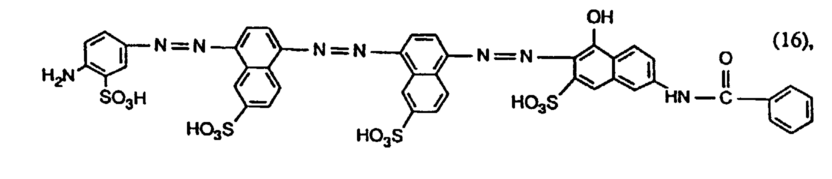 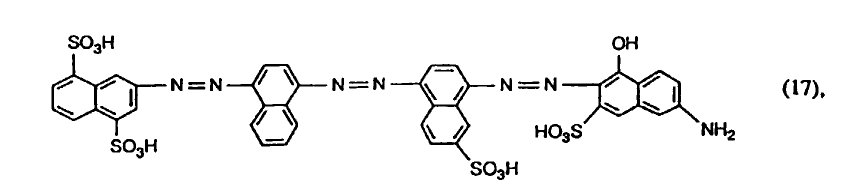 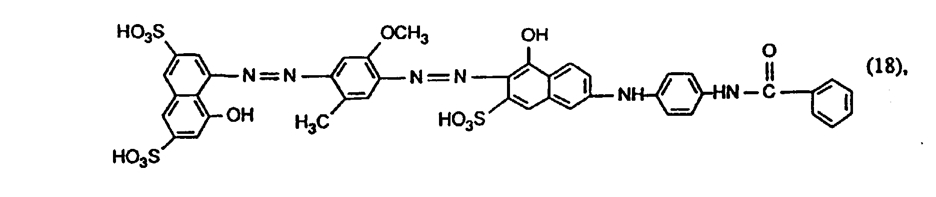 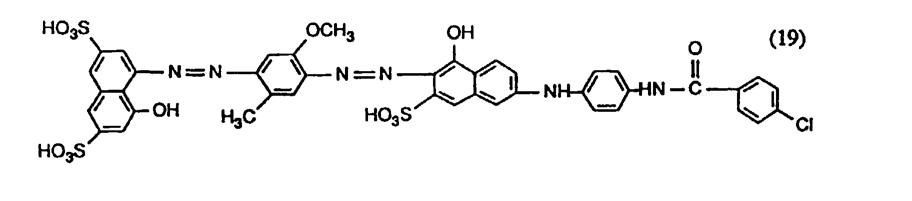 and 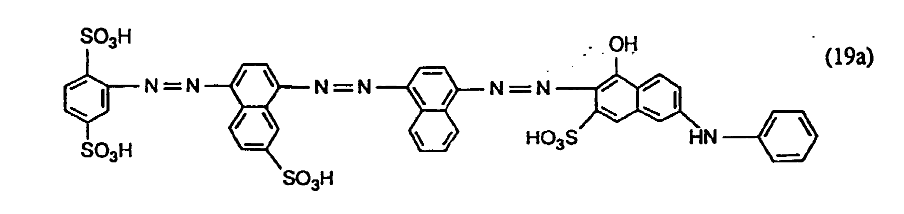 and at least one of the red dyeing dyes of formulae 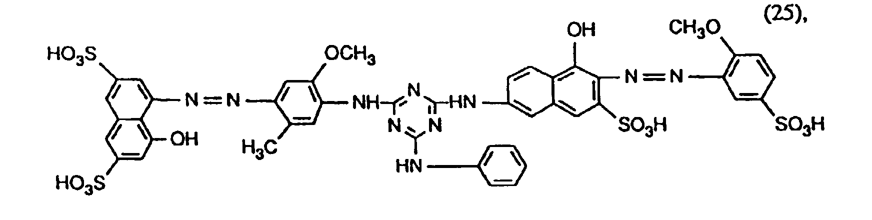 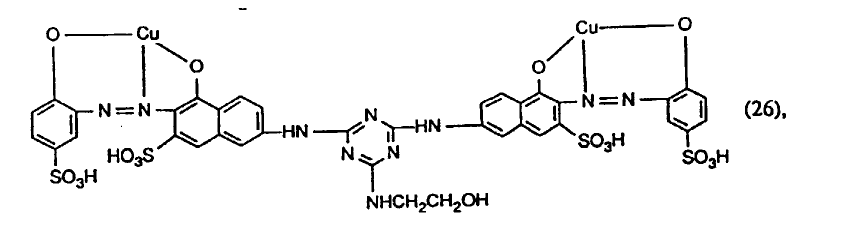 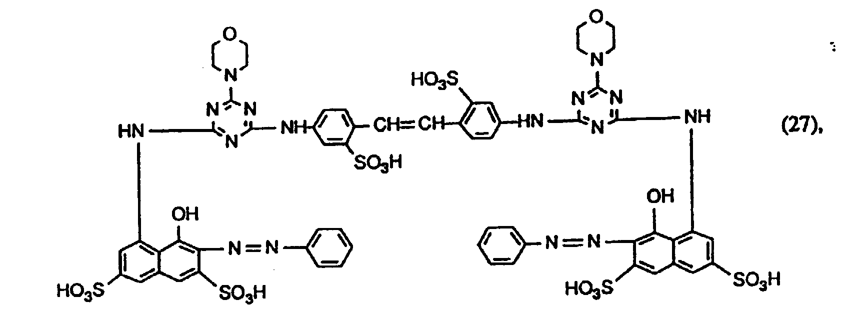 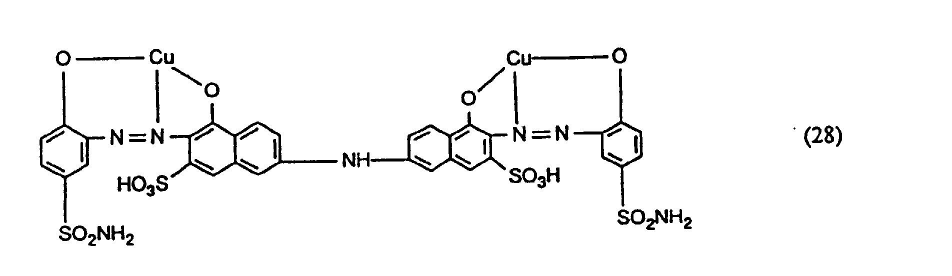 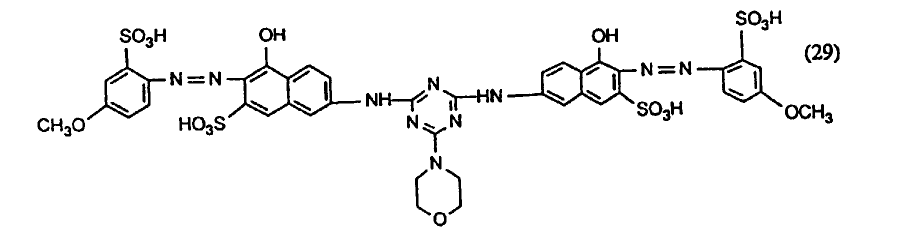 especially a yellow dyeing dye of formula (11) together with a blue dyeing dye of formula (16) and a red dyeing dye of formula (25).

11. A process according to any one of claims 1 to 10, wherein dyeing is carried out in the presence of a salt, especially in the presence of an alkali metal halide or alkali metal sulfate, a portion of said salt being added at the start of the dyeing process and a further portion being added all at once or in increments shortly before or after the dyeing temperature has been reached.

12. A process according to claim 11, wherein the total amount of salt used depends on the total amount of dyes used.

13. A process according to any one of claims 1 to 12, which comprises dyeing blends of synthetic fibres and cellulosic fibre materials, especially polyester/cotton blends, in the presence of a disperse dye for the synthetic fibres, under the dyeing conditions for the synthetic fibres.

14. A process according to claim 13, which comprises dyeing polyester/cotton blends in a one-step, single bath process, using in addition to a dye mixture according to any one of claims 1 to 10 a disperse dye and dyeing from an aqueous liquor at temperatures in the range from 100 to 150°C, preferably from 120 to 130°C, and at a pH between 4 and 7.5.

15. The material, especially the textile material, dyed according to any one of claims 1 to 14.

## Revendications

1. Procédé de teinture ou d'impression en trichromie de matières fibreuses contenant des groupes hydroxyle, caractérisé en ce que l'on utilise au moins un colorant jaune ou orangé de formule : 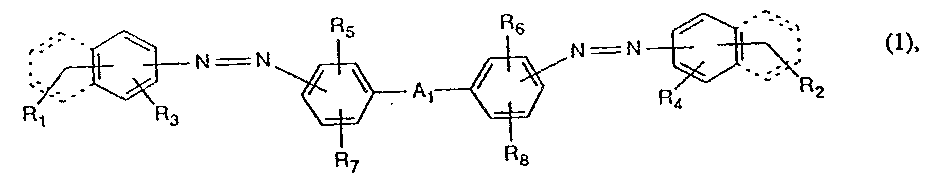 dans laquelle R₁ et R₂ représentent chacun un atome d'hydrogène ou d'halogène ou un groupe alkyle en C₁₋₈, alcoxy en C₁₋₈, carboxy, sulfo, uréido, alcanoylamino en C₂₋₆ dont le fragment alkyle porte éventuellement des substituants, ou arylazo portant éventuellement des substituants, R₃, R₄, R₅, R₆, R₇ et R₈ représentent chacun un atome d'hydrogène ou d'halogène ou un groupe alkyle en C₁₋₈, alcoxy en C₁₋₈, carboxy, sulfo, uréido ou alcanoylamino en C₂₋₆ dont le fragment alkyle porte éventuellement des substituants, et A₁ représente un reste de formule: 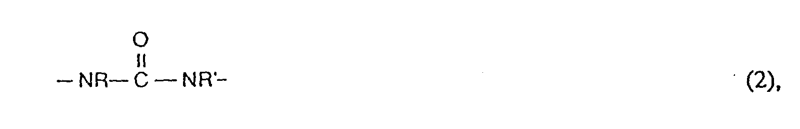 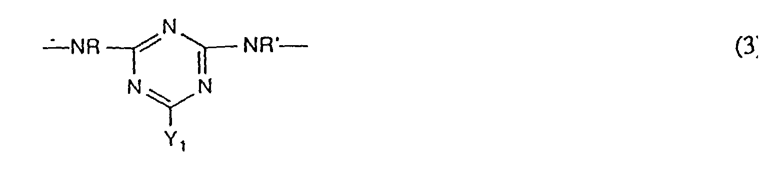 ou 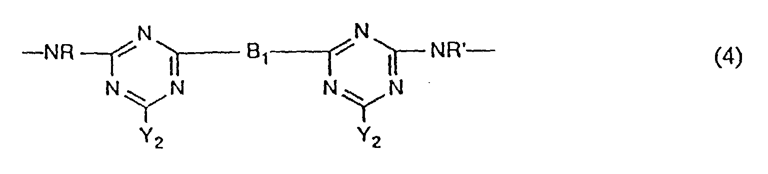 où R et R' représentent chacun un atome d'hydrogène ou un groupe alkyle en C ₁₋₈ portant éventuellement des substituants, Y₁ du reste de formule (3) et Y₂ du reste de formule (4) représentent chacun un atome de chlore ou de brome ou un groupe hydroxy, alcoxy en C₁₋₄, alkylthio en C₁₋₄, amino, N-mono(alkyle en C₁₋₄)amino ou N,N-di(alkyle en C₁₋₄)amino dont le ou les fragments alkyle ne portent pas de substituants ou portent des substituants hydroxy, sulfo, carboxy ou alcoxy en C₁₋₄, cyclohexylamino, phénylamino ou N-(alkyle en C₁₋₄)-N-phénylamino dont le fragment phényle ne porte pas de substituants ou porte des substituants alkyle en C₁₋₄, alcoxy C₁₋₄, carboxy, sulfo et/ou halogéno, morpholino, 3-carboxy-pyri-dine-1-yle ou 3-carbamyl-pyridine-1-yle, et B₁ du reste de formule (4) représente un chaînon pontant,
conjointement avec au moins un colorant bleu correspondant à l'une des formules (13), (14) et (15): 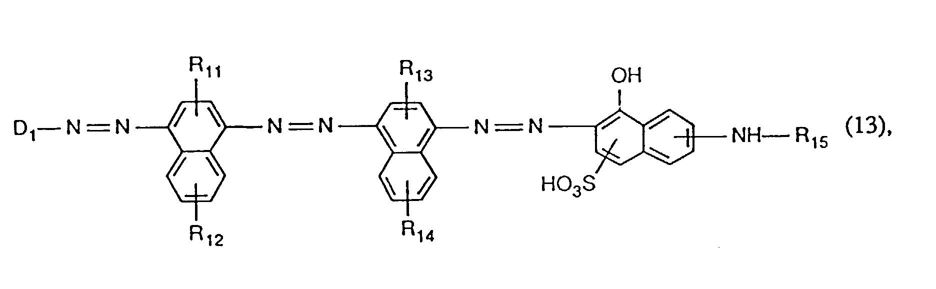 dans laquelle D₁ représente un groupe phényle ou naphtyle portant éventuellement des substituants, R₁₁, R₁₂, R₁₃ et R₁₄ représentent chacun un atome d'hydrogène ou d'halogène, un groupe alkyle en C₁₋₈ ou alcoxy en C₁₋₈ portant éventuellement des substituants, un groupe carboxy, sulfo ou uréido, ou encore un groupe alcanoylamino en C₂₋₆ dont le fragment alkyle porte éventuellement des substituants, et R₁₅ représente un atome d'hydrogène, un groupe alkyle en C₁₋₈ portant éventuellement des substituants, un groupe alcanoyle en C₂₋₆ dont le fragment alkyle porte éventuellement des substituants ou un groupe phényle ou benzoyle dont le fragment phényle porte éventuellement des substituants; 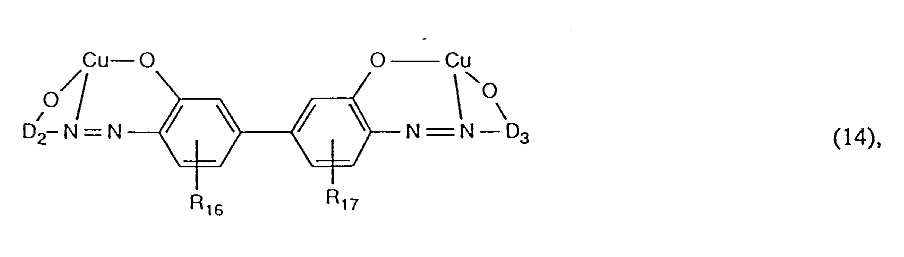 dans laquelle D₂ et D₃ représentent des groupes naphtyle portant éventuellement des substituants et R₁₆ et R₁₇ représentent chacun un atome d'hydrogène ou d'halogène, un groupe alkyle en C₁₋₈ ou alcoxy en C ₁₋₈ portant éventuellement des substituants, un groupe carboxy, sulfo ou uréido, ou encore un groupe alcanoylamino en C₂₋₆ dont le fragment alkyle porte éventuellement des substituants; 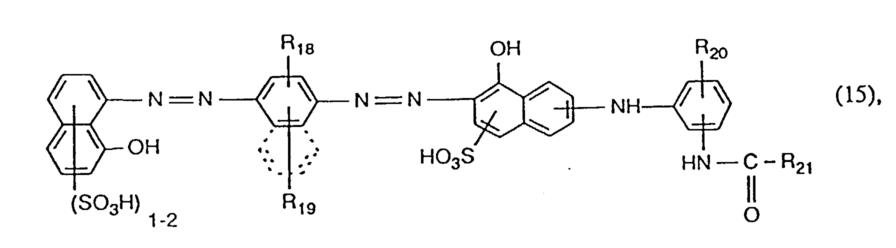 dans laquelle R₁₈, R₁₉ et R₂₀ représentent chacun un atome d'hydrogène ou d'halogène, un groupe alkyle en C₁₋₈ ou alcoxy en C₁₋₈ portant éventuellement des substituants, un groupe carboxy, sulfo ou uréido, ou encore un groupe alcanoylamino en C₂₋₆ dont le fragment alkyle porte éventuellement des substituants, et R₂₁ représente un groupe alkyle en C₁₋₈ ou phényle, portant éventuellement des substituants,
et conjointement avec au moins un colorant rouge correspondant à l'une des formules (20, (21), (22), (23) et (24): 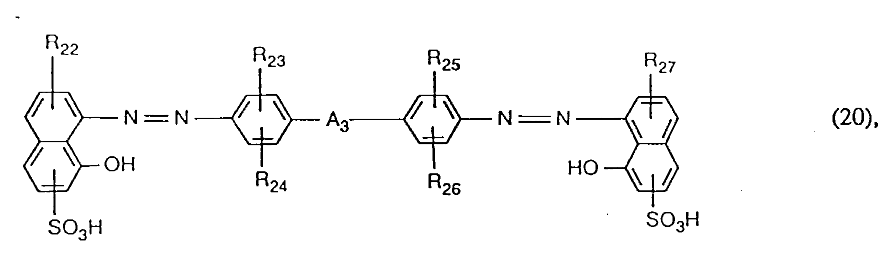 où R₂₂, R₂₃, R₂₄, R₂₅, R₂₆ et R₂₇ représentent chacun un atome d'hydrogène ou d'halogène, un groupe alkyle en C₁₋₈ ou alcoxy en C₁₋₈ portant éventuellement des substituants, un groupe carboxy, sulfo ou uréido, ou encore un groupe alcanoylamino en C₂₋₆ dont le fragment alkyle porte éventuellement des substituants, et A₃ représente un reste de formule :
-NH- , 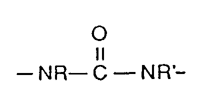
ou 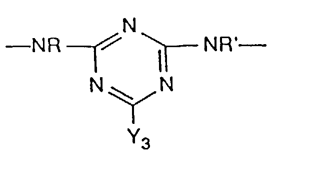 où R et R' représentent chacun un atome d'hydrogène ou un groupe alkyle en C₁₋₈ portant éventuellement des substituants, et Y₃ représente un atome de chlore ou de brome, un groupe hydroxy, alcoxy en C₁₋₄, alkylthio en C₁₋₄ ou amino, un groupe N-mono(alkyle en C₁₋₄)amino ou N,N-di-(alkyle en C₁₋₄)amino dont le ou les groupes alkyle ne portent aucun substituant ou portent des substituants hydroxy, sulfo, carboxy ou alcoxy en C₁₋₄, un groupe cyclohexylamino, un groupe phénylamino ou N-(alkyle en C₁₋₄)-N-phénylamino dont le fragment phényle ne porte aucun substituant ou porte des substituants alkyle en C₁₋₄, alcoxy en C₁₋₄, carboxy,
sulfo et/ou halogéno, ou encore un groupe morpholino, 3-carboxy-pyridine-1-yle ou 3-carbamyl-pyridine- 1-yle; 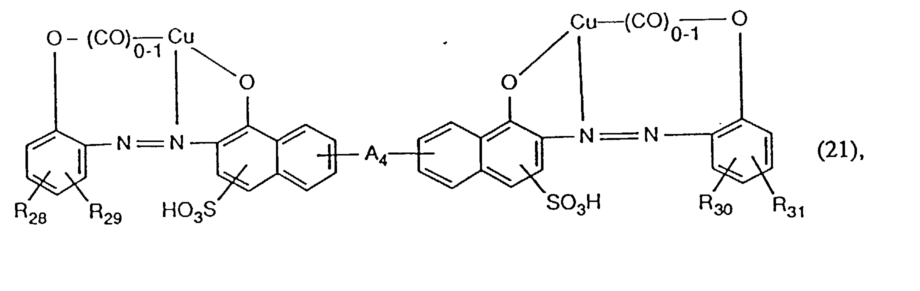 où R₂₈, R₂₉, R₃₀ et R₃₁ représentent chacun un atome d'hydrogène ou d'halogène, un groupe alkyle en C₁₋₈ ou alcoxy en C₁₋₈ portant éventuellement des substituants, un groupe carboxy, sulfo, uréido ou sulfamyle, ou encore un groupe alcanoylamino en C₂₋₆ dont le fragment alkyle porte éventuellement des substituants, et A₄ possède la signification indiquée ci-dessus pour A₃ à propos de la formule (20); 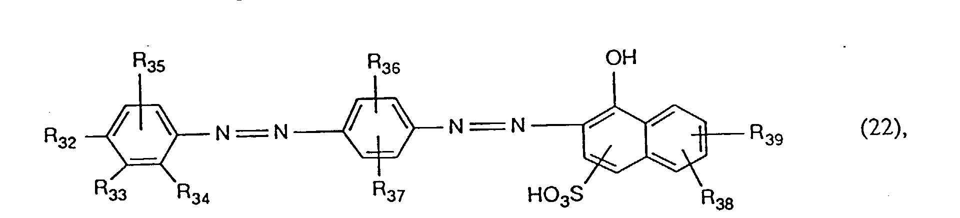 où R₃₂, R₃₃, R₃₄, R₃₅,R₃₆, R₃₇, et R₃₈ représentent un atome d'hydrogène ou d'halogène, un groupe alkyle en C₁₋₈ ou alcoxy en C₁₋₈ portant éventuellement des substituants, un groupe carboxy, sulfo ou uréido, ou encore un groupe alcanoylamino en C₂₋₆ dont le fragment alkyle porte éventuellement des substituants, et R₃₉ représente un groupe benzoylamino dont le noyau phényle porte éventuellement des substituants ou un reste de formule : 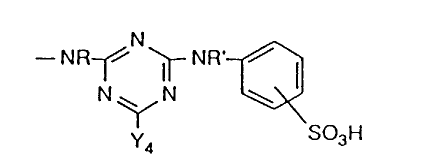 dont le noyau phényle porte éventuellement d'autres substituants, et où R et R' représentent chacun un atome d'hydrogène ou un groupe alkyle en C₁₋₈ portant éventuellement des substituants, et Y₄ possède la signification indiquée ci-dessus pour Y₃ à propos de la formule (20); 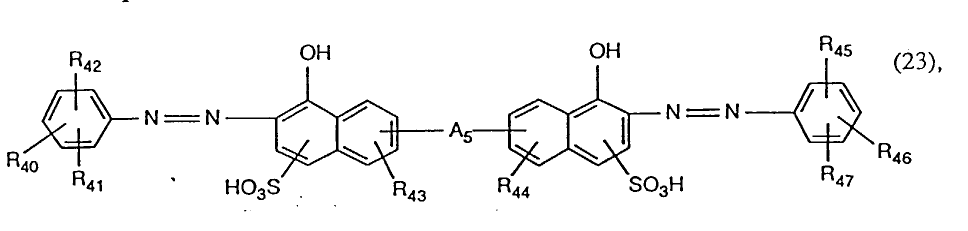 où R₄₀, R₄₁, R₄₂, R₄₃,R₄₄, R₄₅, R₄₆ et R₄₇ représentent un atome d'hydrogène ou d'halogène, un groupe alkyle en C₁₋₈ ou alcoxy en C₁₋₈ portant éventuellement des substituants, un groupe carboxy, sulfo ou uréido, ou encore un groupe alcanoylamino en C₂₋₆ dont le fragment alkyle porte éventuellement des substituants, R₄₀ et R₄₆ pouvant en outre représenter un groupe phénylazo dont le noyau phényle porte éventuellement des substituants, et A₅ possède la signification indiquée ci-dessus pour A₃ à propos de la formule (20) ou bien représente un reste de formule : 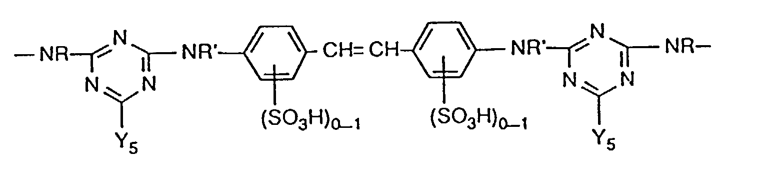 où R et R' représentent chacun un atome d'hydrogène ou une groupe alkyle en C₁₋₈ portant éventuellement des substituants et Y₅ possède la signification indiquée ci-dessus pour Y₃ à propos de la formule (20); 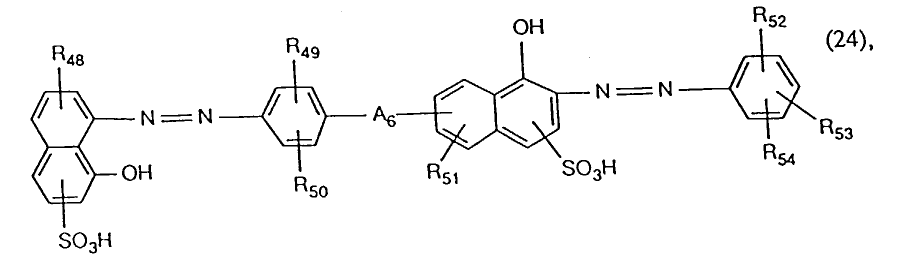 où R₄₈, R₄₉, R₅₀, R₅₁, R₅₂, R₅₃ et R₅₄ représentent un atome d'hydrogène ou d'halogène, un groupe alkyle en C₁₋₈ ou alcoxy en C₁₋₈ portant éventuellement des substituants, un groupe carboxy, sulfo ou uréido, ou encore un groupe alcanoylamino en C₂₋₆ dont le fragmnt alkyle porte éventuellement des substituants, et A₆ possède la signification indiquée ci-dessus pour A₃ à propos de la formule (20).

2. Procédé conforme à la revendication 1, caractérisé en ce que R_{1,} R₂, R₃, R₄, R₅, R₆, R₇ et R₈ représentent chacun un atome d'hydrogène ou d'halogène ou un groupe alkyle en C₁₋₄, alcoxy en C₁₋₄, alcanoylamino en C₂₋₄ ou sulfo.

3. Procédé conforme à l'une des revendications 1 et 2, caractérisé en ce que R₁, R₂, R₃ et R₄ représentent chacun un atome d'hydrogène ou un groupe sulfo.

4. Procédé conforme à l'une des revendications 1 à 3, caractérisé en ce que Y₁ et Y₂ représentent chacun un atome de chlore, un groupe amino, un groupe N-mono(alkyle en C₁₋₄)amino ou N,N-di(alkyle en C₁₋₄)amino dont le ou les groupes alkyle ne portent pas de substituants ou portent des substituants hydroxy, un groupe phénylamino ou un groupe morpholino, et en particulier, un atome de chlore ou un groupe morpholino.

5. Procédé conforme à l'une des revendications 1 à 4, caractérisé en ce que B₁ représente un chaînon pontant de formule:
-NR-(CH₂)₂₋₄-NR'- (5) 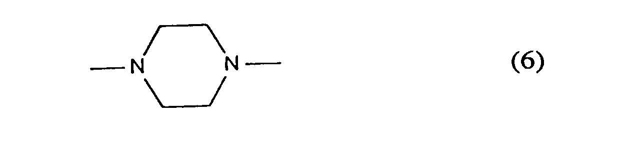 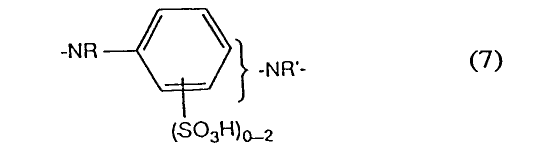 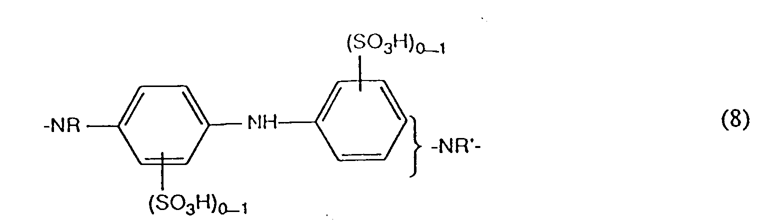
ou 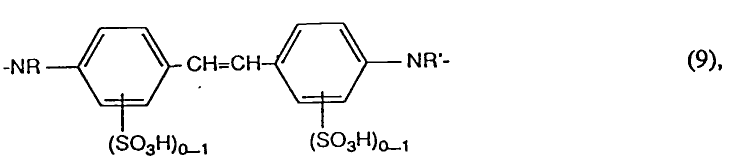 et en particulier un chaînon pontant de formule (6), R et R' représentant chacun un atome d'hydrogène ou un groupe alkyle en C₁₋₈ portant éventuellement des substituants.

6. Procédé conforme à l'une des revendications 1 à 5, caractérisé en ce que l'on utilise, comme colorant de formule (1), un colorant de formule 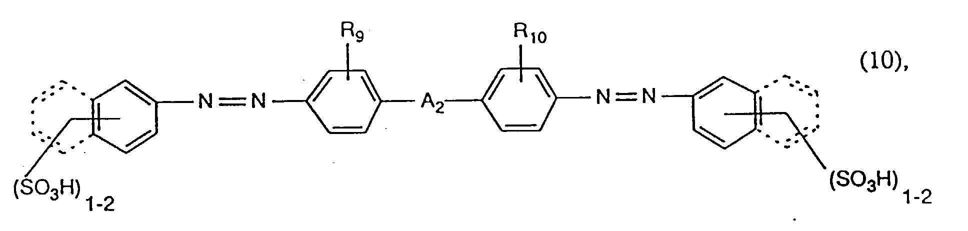 où R₉ et R₁₀ représentent chacun un atome d'hydrogène ou d'halogène ou un groupe alkyle en C₁₋₄, alcoxy en C₁₋₄, alcanoylamino en C₂₋₄ ou sulfo, et A₂ représente un reste de formule : 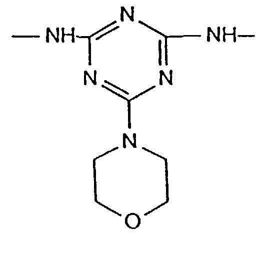 ou

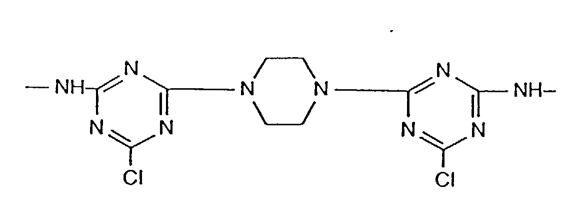

7. Procédé conforme à la revendication 1, caractérisé en ce que l'on utilise, comme colorant de formule (1), un colorant de formule: 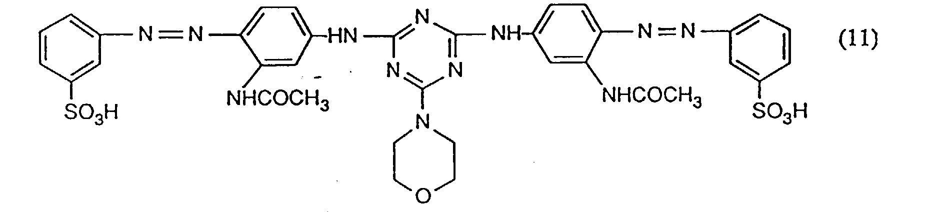 ou

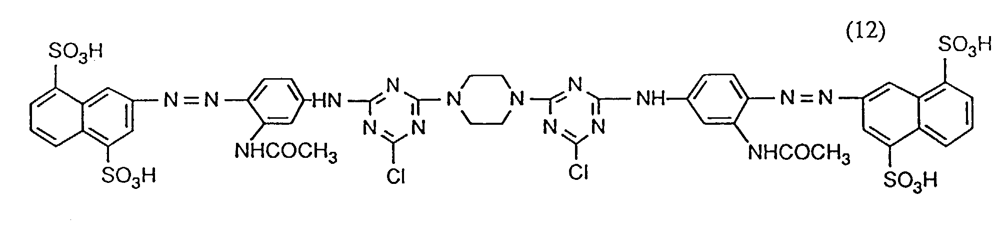

8. Procédé conforme à l'une des revendications 1 à 7, caractérisé en ce que l'on utilise, en tant que colorant bleu, au moins l'un des colorants de formules : 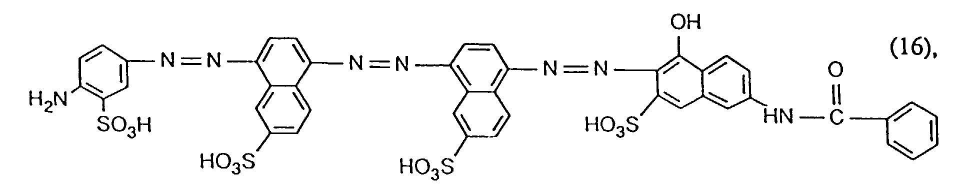 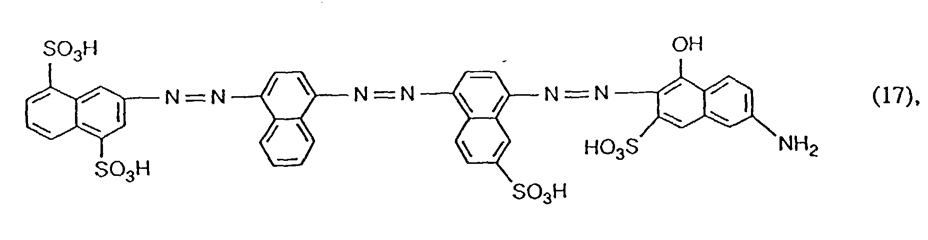 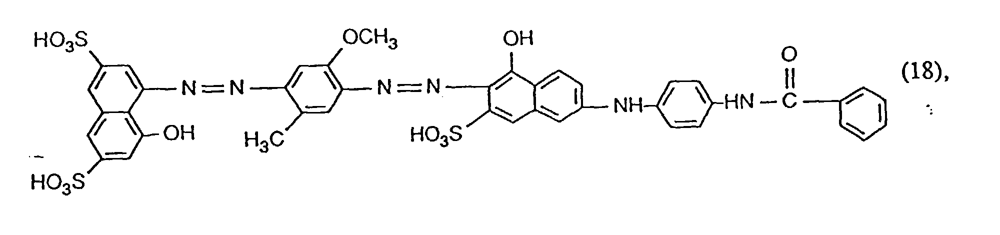 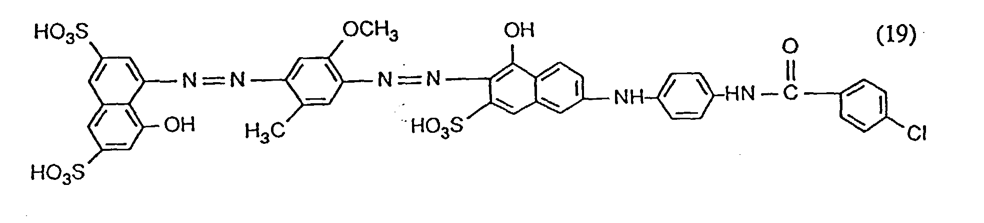 et

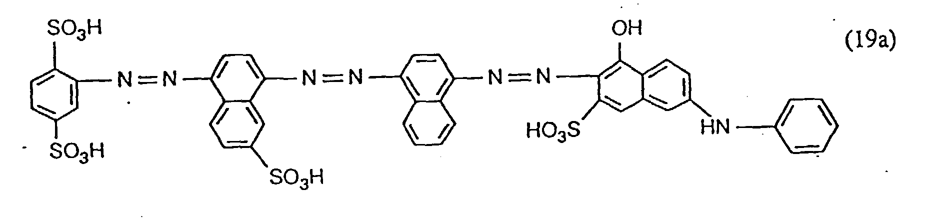

9. Procédé conforme à l'une des revendications 1 à 8, caractérisé en ce que l'on utilise, comme colorant rouge, au moins l'un des colorants de formules : 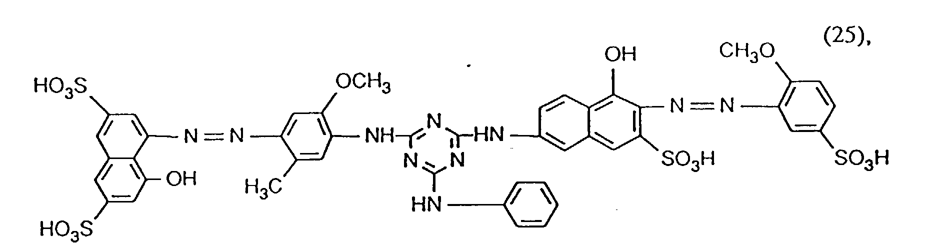 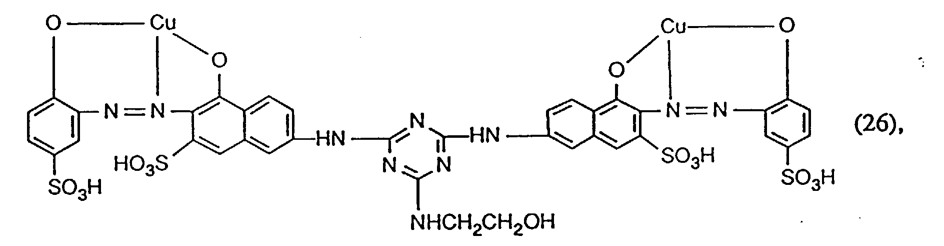 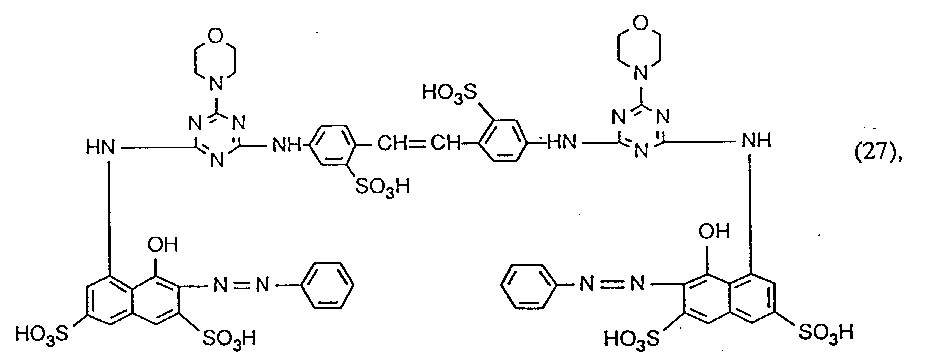 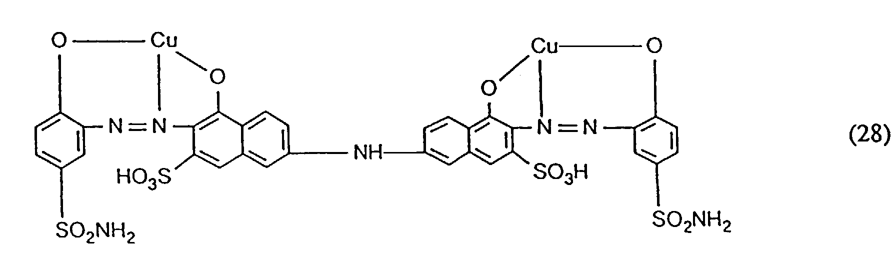 et

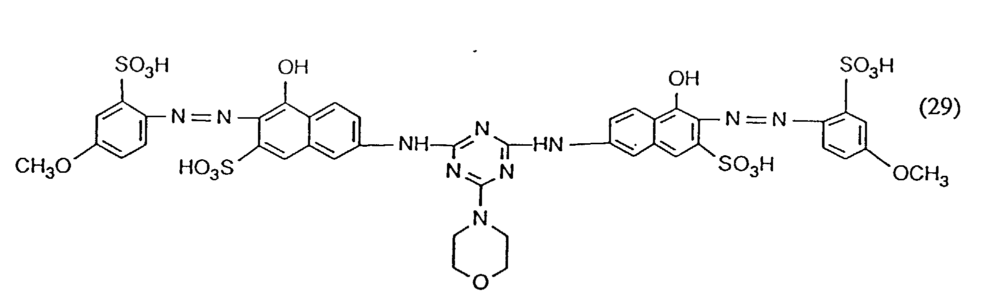

10. Procédé conforme à la revendication 1, caractérisé en ce que l'on utilise au moins l'un des colorants jaune ou orangé de formules : 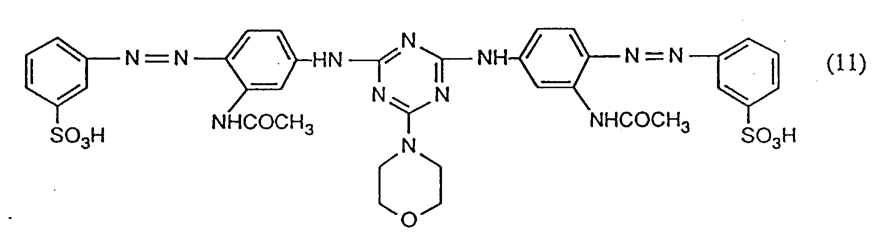 et 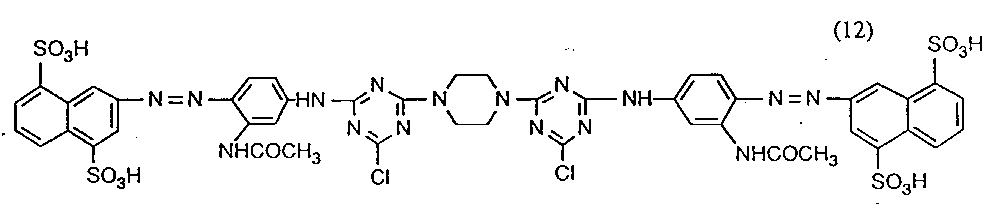 conjointement avec l'un des colorants bleus de formules : 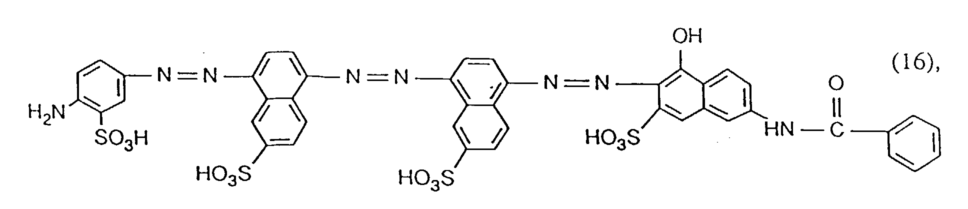 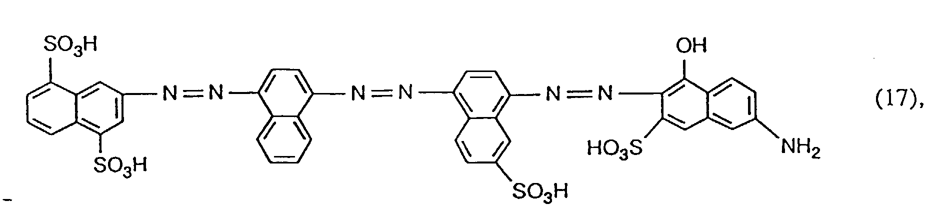 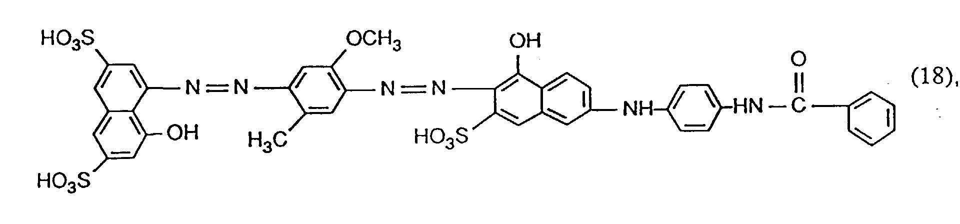 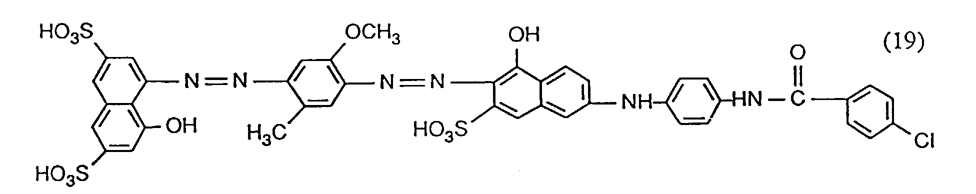 et 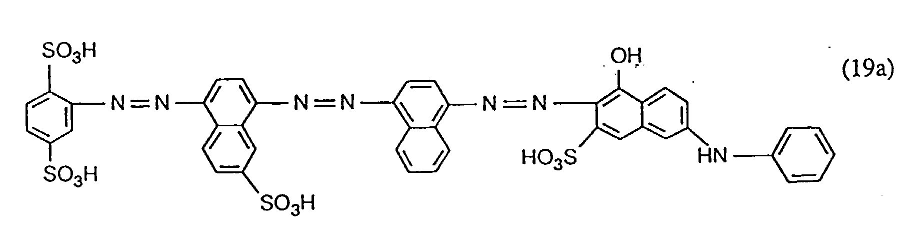 et avec au moins l'un des colorants rouges de formules : 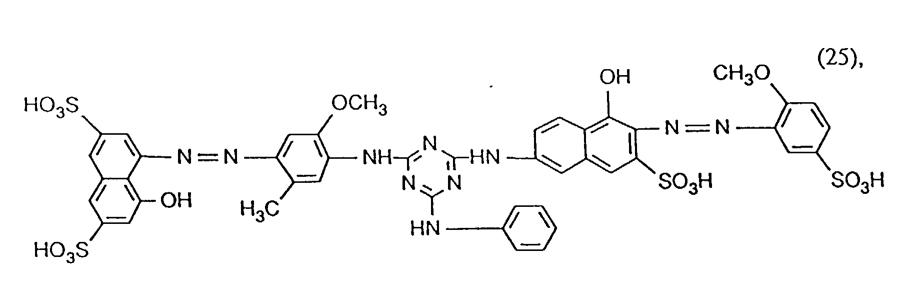 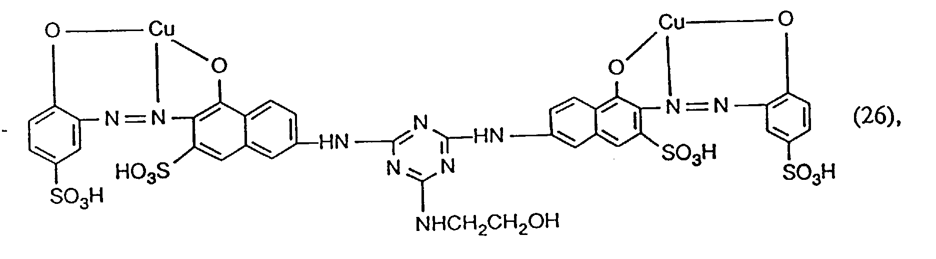 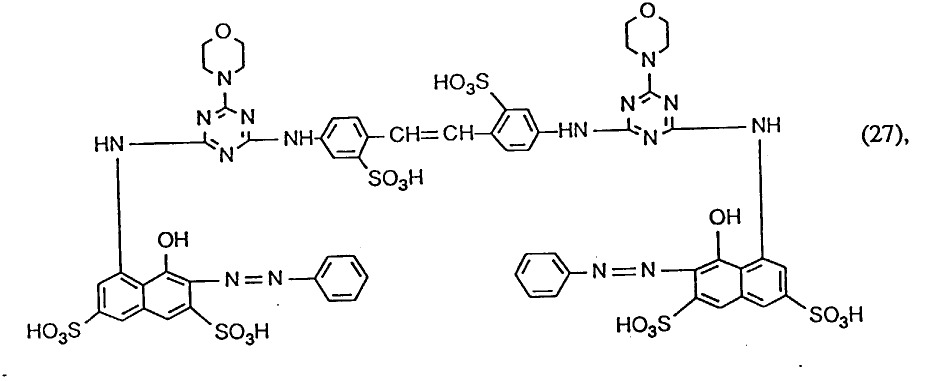 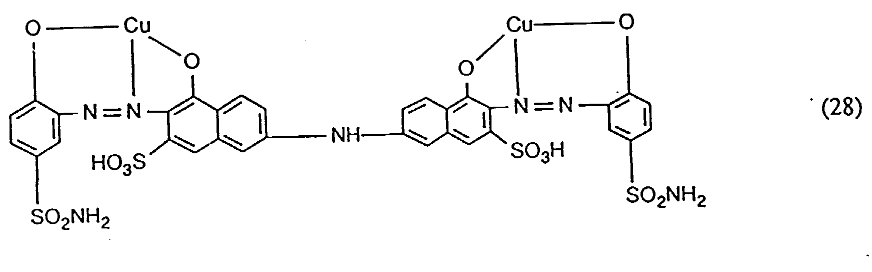 et 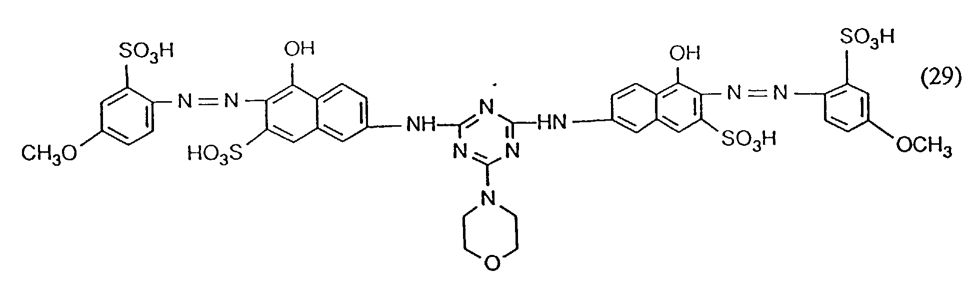 et en particulier, le colorant jaune de formule (11), conjointement avec le colorant bleu de formule (16) et le colorant rouge de formule (25).

11. Procédé conforme à l'une des revendications 1 à 10, caractérisé en ce que l'on opère la teinture en présence d'un sel, en particulier en présence d'un halogénure de métal alcalin ou d'un sulfate de métal alcalin en ajoutant une partie de la quantité de sel au début de l'opération de teinture et en ajoutant l'autre partie peu de temps avant ou après l'établissement de la température de teinture, d'un seul coup ou par portions.

12. Procédé conforme à la revendication 11, caractérisé en ce que l'on utilise une quantité totale de sel qui dépend de la quantité totale de colorant utilisée.

13. Procédé conforme à l'une des revendications 1 à 12, caractérisé en ce que l'on teint des mélanges de fibres constitués de fibres synthétiques et de matières fibreuses cellulosiques, en particulier des tissus mélangés en polyester/coton, en présence d'un colorant dispersé destiné aux fibres synthétiques et dans des conditions de teinture appropriées pour les fibres synthétiques.

14. Procédé conforme à la revendication 13, caractérisé en ce que l'on teint un tissu mélangé en polyester/coton en un procédé réalisé en une seule étape et dans un seul bain, en utilisant un colorant dispersé en plus d'un mélange de colorants indiqué dans l'une des revendications 1 à 10, et en opérant la teinture en bain aqueux, à une température située dans l'intervalle allant de 120°C à 150°C et de préférence de 120°C à 130°C, et à un pH situé entre 4 et 7,5.

15. Matières, en particulier matières textiles, teintes conformément à l'une des revendications 1 à 14.
